(19) Europäisches Patentamt / European Patent Office / Office européen des brevets

(11) **EP 3 138 079 B1**

(12) **FASCICULE DE BREVET EUROPEEN**

(45) Date de publication et mention
de la délivrance du brevet:
**18.09.2019 Bulletin 2019/38**

(21) Numéro de dépôt: **15725803.9**

(22) Date de dépôt: **24.04.2015**

(51) Int Cl.:
*G06T 7/246* (2017.01)     *G06T 7/73* (2017.01)
*G06T 1/00* (2006.01)

(86) Numéro de dépôt international:
**PCT/FR2015/051129**

(87) Numéro de publication internationale:
**WO 2015/166176 (05.11.2015 Gazette 2015/44)**

(54) **PROCÉDÉ DE SUIVI DE FORME DANS UNE SCÈNE OBSERVÉE PAR UN CAPTEUR ASYNCHRONE DE LUMIÈRE**

VERFAHREN ZUR FORMVERFOLGUNG IN EINER DURCH EINEN ASYNCHRONEN LICHTSENSOR BEOBACHTETEN SZENE

METHOD OF TRACKING SHAPE IN A SCENE OBSERVED BY AN ASYNCHRONOUS LIGHT SENSOR

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **30.04.2014 FR 1454003**

(43) Date de publication de la demande:
**08.03.2017 Bulletin 2017/10**

(73) Titulaires:
• **Centre National de la Recherche Scientifique (C.N.R.S.)**
**75016 Paris (FR)**
• **Sorbonne Université**
**75006 Paris (FR)**

(72) Inventeurs:
• **BENOSMAN, Ryad**
**F-93500 Pantin (FR)**
• **IENG, Siohoi**
**F-93100 Montreuil (FR)**
• **REGNIER, Stéphane**
**F-92270 Bois-Colombes (FR)**
• **ZHENJIANG, Ni**
**F-94700 Maisons-Alfort (FR)**

(74) Mandataire: **Cabinet Plasseraud**
**66, rue de la Chaussée d'Antin**
**75440 Paris Cedex 09 (FR)**

(56) Documents cités:
• **ZHENJIANG NI ET AL: "Asynchronous Event-Based Visual Shape Tracking for Stable Haptic Feedback in Microrobotics", IEEE TRANSACTIONS ON ROBOTICS, IEEE SERVICE CENTER, PISCATAWAY, NJ, US, vol. 28, no. 5, octobre 2012 (2012-10), pages 1081-1089, XP011474264, ISSN: 1552-3098, DOI: 10.1109/TRO.2012.2198930**
• **BESL P J ET AL: "A METHOD FOR REGISTRATION OF 3-D SHAPES", IEEE TRANSACTIONS ON PATTERN ANALYSIS AND MACHINE INTELLIGENCE, IEEE COMPUTER SOCIETY, USA, vol. 14, no. 2, février 1992 (1992-02), pages 239-256, XP000248481, ISSN: 0162-8828, DOI: 10.1109/34.121791**
• **BENOSMAN RYAD ET AL: "Event-Based Visual Flow", IEEE TRANSACTIONS ON NEURAL NETWORKS AND LEARNING SYSTEMS, IEEE, PISCATAWAY, NJ, USA, vol. 25, no. 2, février 2014 (2014-02), pages 407-417, XP011536914, ISSN: 2162-237X, DOI: 10.1109/TNNLS.2013.2273537 [extrait le 2014-01-10]**

**Description**

La présente invention concerne les méthodes de recherche et de poursuite d'objets en mouvement dans des scènes observées par des capteurs optiques.

Parmi les techniques connues de repérage d'objets dans des images, il existe des algorithmes itératifs à recherche des points les plus proches, c'est-à-dire de type ICP (« Iterative Closest Point »). Ces algorithmes ICP sont connus pour leur efficacité dans des applications telles que l'alignement utilisant de données de distance (« range data registration »), la reconstruction 3D, la poursuite d'objets et l'analyse de mouvement. Voir par exemple l'article « Efficient Variants of the ICP Algorithm », de S. Rusinkiewicz et M. Levoy, 3rd International Conférence on 3D Digital Imaging and Modeling, juin 2001, pp. 145-152.

Le principe d'un algorithme ICP est d'utiliser un ensemble de points servant de modèle délimitant le contour de l'objet afin de le faire correspondre avec un ensemble de points faisant partie des données acquises. Une transformation entre l'ensemble-modèle connu et l'ensemble de points des données est estimée pour exprimer leurs relations géométriques en minimisant une fonction d'erreur. La poursuite d'une forme arbitraire peut être résolue par une technique ICP lorsqu'on lui fournit un modèle de cette forme.

L'article « Iterative Estimation of Rigid Body Transformations - Application to robust object tracking and Iterative Closest Point », de M. Hersch, et al., Journal of Mathematical Imaging and Vision, 2012, Vol. 43, No. 1, pp 1-9, présente une méthode itérative pour l'exécution de l'algorithme ICP. Pour déterminer une transformation spatiale rigide T permettant de repérer dans une image un motif défini par un ensemble de points $\{x_i\}$ auxquels correspondent respectivement des points $\{y_i\}$ de l'image, la solution classique forme analytique (« closed form »), consistant à rechercher la transformation T par minimisation d'un critère d'erreur de la forme $\sum_i \left\| y_i - T x_i \right\|^2$ où la somme porte sur l'ensemble des points $x_i$ du motif, est remplacée par une solution itérative dans laquelle on part d'une estimation initiale de la transformation T, et chaque itération consiste à prendre au hasard un point $x_i$ du motif, à trouver son point correspondant $y_i$ dans l'image et à mettre à jour la transformation T par soustraction d'un terme proportionnel au gradient $\nabla \| y_i - T x_i \|^2$ relativement aux paramètres de translation et de rotation de la transformation T. Lorsque la transformation T devient stationnaire d'une itération à l'autre, les itérations s'arrêtent et T est conservée comme estimation finale de la transformation permettant de repérer le motif dans l'image.

Dans la vision traditionnelle basée sur des images successivement acquises, la cadence des images de la caméra (de l'ordre de 60 images par seconde, par exemple) est souvent insuffisante pour les techniques ICP. Le calcul répétitif de la même information dans des images successives limite aussi la performance en temps réel des algorithmes ICP. Dans la pratique, ils sont cantonnés à des cas de détection de formes simples qui ne se déplacent pas trop rapidement.

Contrairement aux caméras classiques qui enregistrent des images successives à des instants d'échantillonnage réguliers, les rétines biologiques ne transmettent que peu d'information redondante sur la scène à visualiser, et ce de manière asynchrone. Des capteurs de vision asynchrones basés sur événement délivrent des données numériques compressées sous forme d'événements. Une présentation de tels capteurs peut être consultée dans « Activity-Driven, Event-Based Vision Sensors », T. Delbrück, et al., Proceedings of 2010 IEEE International Symposium on Circuits and Systems (ISCAS), pp. 2426-2429. Les capteurs de vision basés sur événement ont pour avantage d'enlever de la redondance, de réduire les temps de latence et d'augmenter la gamme dynamique par rapport aux caméras classiques.

La sortie d'un tel capteur de vision peut consister, pour chaque adresse de pixel, en une séquence d'événements asynchrones représentatifs des changements de réflectance de la scène au moment où ils se produisent. Chaque pixel du capteur est indépendant et détecte des changements d'intensité supérieurs à un seuil depuis l'émission du dernier événement (par exemple un contraste de 15% sur le logarithme de l'intensité). Lorsque le changement d'intensité dépasse le seuil fixé, un événement ON ou OFF est généré par le pixel selon que l'intensité augmente ou diminue. Certains capteurs asynchrones associent les événements détectés à des mesures d'intensité lumineuse. Le capteur n'étant pas échantillonné sur une horloge comme une caméra classique, il peut rendre compte du séquencement des événements avec une très grande précision temporelle (par exemple de l'ordre de 1 μs). Si on utilise un tel capteur pour reconstruire une séquence d'images, on peut atteindre une cadence d'images de plusieurs kilohertz, contre quelques dizaines de hertz pour des caméras classiques.

Les capteurs de vision basés sur événement ont des perspectives prometteuses, et il est souhaitable de proposer des méthodes efficaces pour poursuivre des objets en mouvement à partir des signaux délivrés par de tels capteurs.

Dans « Fast sensory motor control based on event-based hybrid neuromorphic-procedural system », ISCAS 2007, New Orleans, 27-30 mai 2007 pp. 845-848, T. Delbrück et P. Lichtsteiner décrivent un algorithme de poursuite de grappes (« cluster tracker ») utilisable par exemple pour piloter un robot gardien de but de football à l'aide d'un capteur de vision basé sur événement. Chaque grappe modélise un objet mobile comme une source d'événements. Des événements qui tombent dans la grappe changent la position de celle-ci. Une grappe n'est considérée comme visible que si elle a reçu un nombre d'événements supérieur à un seuil.

Dans « Asynchronous event-based visual shape tracking for stable haptic feedback in microrobotics », Z. Ni, et al., IEEE Transactions on Robotics, 2012, Vol. 28, No. 5, pp. 1081-1089, il est présenté une version basée sur événement (« event-based ») de l'algorithme ICP, qui repose sur la minimisation d'une fonction coût en forme analytique.

Il existe un besoin pour un procédé de suivi de formes qui soit rapide et d'une bonne précision temporelle.

Il est proposé un procédé de suivi de forme dans une scène, comprenant :

- recevoir de l'information asynchrone d'un capteur de lumière ayant une matrice de pixels disposée en regard de la scène, l'information asynchrone comprenant, pour chaque pixel de la matrice, des événements successifs provenant dudit pixel ; et

- mettre à jour un modèle représentant la forme poursuivie d'un objet après détection d'événements attribués audit objet dans l'information asynchrone.

La mise à jour comprend, suite à la détection d'un événement :

- associer un point du modèle à l'événement détecté par minimisation d'un critère de distance par rapport au pixel de la matrice d'où provient l'événement détecté ; et
- déterminer le modèle mis à jour en fonction du pixel de la matrice d'où provient l'événement détecté et du point associé et indépendamment des associations effectuées avant la détection dudit événement.

La mise en correspondance des points observés avec le modèle n'est pas effectuée de manière groupée après acquisition d'une image complète ou même d'un nombre d'événements suffisant au regard de la forme poursuivie dans la scène. La poursuite de formes par l'algorithme itératif est effectuée de manière beaucoup plus rapide, au fur et à mesure de l'arrivée des événements asynchrones.

La détermination de la transformation spatiale permettant la mise à jour du modèle repose habituellement sur la minimisation d'une fonction coût de la forme:

$$\sum D\big(p[ev], F_t(A[ev])\big) \qquad\qquad (1)$$

où:

p[ev] désigne la position dans la matrice du pixel d'où est provenu un événement ev ;
A[ev] désigne le point du modèle associé à l'événement ev ;
$F_t(.)$ désigne la transformation spatiale ;
D(.,.) est une mesure de distance dans le plan de la matrice ;
et la somme porte sur un certain nombre d'associations (p[ev] ↔ A[ev]) qui ont pu être effectuées.

Dans le procédé proposé, l'approche est différente car il est tenu compte de l'association entre l'événement courant et le point du modèle qui lui a été associé, mais pas des associations antérieures. Alors que la fonction coût ne peut pas être minimisée sur cette seule base, chaque itération permet de calculer un terme correctif, à la manière d'une descente de gradient, qui est appliqué au modèle pour faire converger celui-ci vers la solution qui poursuit bien la forme dans la scène. Cette convergence est assurée, alors même que l'objet est en mouvement, grâce à la dynamique et au nombre élevé des événements que provoque ce mouvement.

Pour filtrer du bruit d'acquisition, on peut s'abstenir de mettre à jour le modèle lorsqu'aucun point du modèle n'est situé à une distance inférieure à un seuil par rapport au pixel d'où provient un événement détecté, qui dans ce cas n'est pas attribué à l'objet.

Une réalisation intéressante du procédé comprend en outre :

- estimer un plan de déplacement de l'objet, le plan de déplacement étant estimé dans un espace à trois dimensions, à savoir deux dimensions spatiales correspondant à deux directions de la matrice de pixels et une dimension temporelle, par minimisation d'un critère de distance par rapport à un ensemble de points marquant des événements détectés qui ont été attribués à l'objet au cours d'une fenêtre temporelle se terminant à un instant courant ; et

- suite à la détection d'un événement, tenir compte du plan de déplacement estimé de l'objet pour décider d'attribuer ou non l'événement à l'objet.

Les propriétés de ce « plan de déplacement » permettent plusieurs traitements utiles, notamment dans le cas où plusieurs objets ont des formes respectives poursuivies dans la scène, chacun des objets ayant un modèle respectif mis à jour après détection d'événements qui lui sont attribués et un plan de déplacement estimé.

On peut ainsi, suite à la détection d'un événement attribuable à au moins deux des objets, calculer des distances respectives, dans l'espace à trois dimensions, entre un point marquant l'événement détecté et les plans de déplacement respectivement estimés pour lesdits objets, et attribuer l'événement détecté à l'objet pour lequel la distance calculée est minimale. Ceci permet de combiner des contraintes spatiales et temporelles pour lever des ambiguïtés entre plusieurs objets auxquels un événement détecté est attribuable.

Une autre possibilité est d'estimer une distribution statistique de distances entre le plan de déplacement de l'objet et des points marquant des événements détectés qui ont été attribués à l'objet puis, après détection d'un événement, tenir compte du plan de déplacement estimé de l'objet et de la distribution statistique estimée pour décider d'attribuer ou non l'événement à l'objet. Ceci permet de tenir compte du mouvement éventuel du fond de la scène lorsque le capteur asynchrone est lui-même en mouvement. En particulier, on peut déterminer un intervalle de valeurs admissibles de distance d'après la distribution statistique estimée, et ne pas attribuer un événement détecté à l'objet si le point marquant cet événement détecté dans l'espace à trois dimensions présente, par rapport au plan de déplacement estimé, une distance tombant en dehors de l'intervalle de valeurs admissibles de distance.

D'autres caractéristiques peuvent être prévues lorsque plusieurs objets ont des formes respectives poursuivies dans la scène, chacun des objets ayant un modèle respectif mis à jour après détection d'événements qui lui sont attribués.

Ainsi, si suite à la détection d'un événement, un seul des objets remplit la condition d'avoir dans son modèle un point ayant une distance inférieure à un seuil par rapport au pixel de la matrice d'où provient l'événement détecté, l'événement détecté peut être attribué à cet objet.

Suite à la détection d'un événement attribuable à au moins deux des objets, il est possible de prendre en compte des contraintes spatiales pour lever l'ambiguïté. On peut ainsi associer à l'événement détecté, pour chaque objet auquel l'événement détecté est attribuable, un point du modèle de cet objet par minimisation d'un critère de distance respectif par rapport au pixel de la matrice d'où provient l'événement détecté, et d'attribuer l'événement détecté à l'objet pour lequel le critère de distance minimisé est le plus faible. Une variante consiste à n'affecter l'événement détecté à aucun des objets.

Une autre variante consiste à affecter l'événement détecté à chacun des objets auxquels l'événement détecté est attribuable. La mise à jour des modèles des objets auxquels l'événement détecté est attribué peut éventuellement être effectuée avec des pondérations dépendant des critères de distance respectivement minimisés pour lesdits objets.

Suite à la détection d'un événement attribuable à au moins deux objets, il est encore possible de prendre en compte des contraintes temporelles pour lever l'ambiguïté. Pour chaque objet, on peut ainsi estimer une cadence d'événements qui lui sont attribués et mémoriser l'instant auquel a été détecté le dernier événement qui lui a été attribué. Un événement attribuable à au moins deux objets est alors attribué à celui des objets pour lequel le produit de la cadence d'événements estimée par l'intervalle de temps entre l'instant mémorisé et l'instant de détection de l'événement est le plus proche de 1.

Dans une réalisation du procédé, la détermination du modèle mis à jour comporte une estimation d'une transformation spatiale définie par un ensemble de paramètres, et une application de la transformation spatiale estimée au modèle. L'estimation de la transformation spatiale comporte un calcul des paramètres de la transformation spatiale en fonction du gradient d'une distance, dans le plan de la matrice de pixels, entre le pixel de la matrice d'où provient l'événement détecté et un point obtenu en appliquant la transformation spatiale au point du modèle associé à l'événement détecté.

Un cas particulier est celui où la transformation spatiale est une transformation rigide, incluant une translation et une rotation dans le plan de la matrice de pixels. Une possibilité est de prendre pour la translation un vecteur $\Delta T$ égal à $-\eta_1.\nabla_T f(\Delta\theta_0, \Delta T_0)$ et pour la rotation un angle $\Delta\theta$ égal à $-\eta_2.\nabla_\theta f(\Delta\theta_0, \Delta T_0)$, où $\eta_1$ et $\eta_2$ sont des pas de convergence positifs prédéfinis et $\Delta\theta_0$ et $\Delta T_0$ sont des valeurs particulières de l'angle de rotation et du vecteur de translation. Par exemple, on peut prendre

$$\Delta\theta_0 = \overset{\wedge}{mcp}$$

et $\Delta T_0 = cp - R_{\Delta\theta_0}[cm]$, où p désigne le pixel de la matrice d'où provient l'événement détecté, m désigne le point du modèle associé à l'événement détecté, c désigne le centre de la rotation, cp désigne un vecteur allant de c à p, cm désigne un vecteur allant de c à m, et $R_{\Delta\theta_0}[.]$ est la rotation de centre c et d'angle $\Delta\theta_0$.

Un autre cas d'intérêt est celui où la transformation spatiale est une transformation affine incluant en outre une application de facteurs d'échelle respectifs suivant deux axes compris dans la matrice de pixels. Les facteurs d'échelle $s_x$, $s_y$ suivant les deux axes x, y peuvent être calculés selon $s_x = 1 + \eta_3.(|p_x| - |m_x|)$ et $s_y = 1 + \eta_3.(|p_y| - |m_y|)$, respectivement,

où $\eta_3$ est un pas de convergence positif prédéfini, $p_x$ et $p_y$ sont les coordonnées suivant les axes x et y du pixel de la matrice d'où provient l'événement détecté, et $m_x$ et $m_y$ sont les coordonnées suivant les axes x et y du point du modèle associé à l'événement détecté.

Un autre aspect de la présente invention se rapporte à un dispositif de suivi de forme dans une scène, comprenant un calculateur configuré pour exécuter un procédé tel que défini ci-dessus à partir d'information asynchrone reçue d'un capteur de lumière.

D'autres particularités et avantages de la présente invention apparaîtront dans la description ci-après, en référence aux dessins annexés, dans lesquels :

- la figure 1 est un schéma synoptique d'un dispositif adapté à la mise en oeuvre de l'invention ;

- la figure 2A est un diagramme montrant un exemple de profil d'intensité lumineuse au niveau d'un pixel d'un capteur asynchrone ;

- la figure 2B montre un exemple de signal délivré par le capteur asynchrone en réponse au profil intensité de la figure 2A ;

- la figure 2C illustre la reconstruction du profil intensité à partir du signal de la figure 2B ;

- les figures 3A-B sont des diagrammes analogues à ceux des figures 2A-B illustrant un mode d'acquisition lumineuse utilisable dans un autre exemple de réalisation du procédé ;

- la figure 4 est un schéma synoptique d'un capteur asynchrone de lumière de type ATIS ;

- la figure 5 est un diagramme montrant des événements générés par un capteur asynchrone placé en regard d'une scène comportant une étoile tournante ;

- la figure 6A et une vue d'un équipement utilisé pour tester le fonctionnement du procédé de poursuite de forme selon l'invention ;

- la figure 6B montre un exemple de carte d'accumulation d'événements obtenue dans la configuration de la figure 5A ;

- la figure 7 montre différentes images pour illustrer le fonctionnement d'un algorithme ICP dans l'exemple d'une étoile tournante ;

- la figure 8 est un organigramme d'un exemple d'algorithme qui ne représente pas un mode de réalisation de l'invention ;

- les figures 9 et 10 sont des diagrammes montrant des éléments géométriques - la figure 9 ne représente pas un mode de réalisation de l'invention ;

- la figure 11 est un organigramme d'un exemple d'algorithme utilisable dans d'autres mises en oeuvre de l'invention ;

- la figure 12 est un diagramme illustrant un mode de calcul de transformation spatiale lors d'une itération d'un mode de réalisation d'un procédé selon la figure 11;

- la figure 13 est un graphique montrant les points d'un espace à trois dimensions, incluant deux dimensions spatiales et une dimension temporelle, où sont enregistrés les événements attribués à une arête en mouvement dans le champ de vision d'un capteur asynchrone, et leur interpolation par un plan de déplacement ;

- la figure 14 est un organigramme d'un exemple de procédure utilisable à l'étape 44 de la figure 11 ;

- les figures 15 et 16 sont des organigrammes d'exemples de procédures utilisables à l'étape 56 de la figure 14 ;

- la figure 17 est un graphique montrant une distribution de distances entre des événements et un plan de déplacement du type de celui montré sur la figure 13 ;

- la figure 18 est un organigramme d'une procédure utilisable pour estimer un intervalle de valeurs admissibles de distance tel que représenté sur la figure 17 ;

- la figure 19 est un graphique indiquant des erreurs de poursuite constatées en appliquant trois méthodes de poursuite différentes dans une expérience réalisée dans les conditions des figures 6 et 7 ;

- la figure 20 est un diagramme illustrant la poursuite de trois formes d'objets dans un exemple d'exécution de l'invention ;

- la figure 21 est un graphique illustrant les résultats d'une expérience réalisée en prenant en compte des facteurs d'échelle $s_x$, $s_y$ dans la transformation spatiale appliquée au modèle d'un objet dans une réalisation de l'invention ;

- la figure 22 montre des images obtenues dans une autre expérimentation de l'invention ;

- les figures 23 et 24 sont des graphiques indiquant des erreurs de poursuite constatées en appliquant deux méthodes de poursuite différentes dans l'expérimentation de la figure 22 ;

- les figures 25 et 26 sont des graphiques illustrant deux mode possibles de levée d'ambiguïté entre plusieurs objets dans une autre expérimentation de l'invention ;

- les figure 27-32 sont des graphiques indiquant les vitesses de modèles observés lors de la poursuite de deux formes d'objets en mouvement selon six méthodes différentes dans la même expérimentation que les figures 25-26 ;

- la figure 33 est un graphique montrant deux plans de déplacement suivant la figure 13, utilisés pour décider de l'attribution d'événements aux objets dans le cadre de la poursuite dans les résultats sont montrés sur la figure 32 ; et

- les figure 34 et 35 sont des graphiques montrant des vitesses de modèle obtenues dans deux expérimentations de l'invention dans lesquelles le capteur asynchrone était lui-même en mouvement.

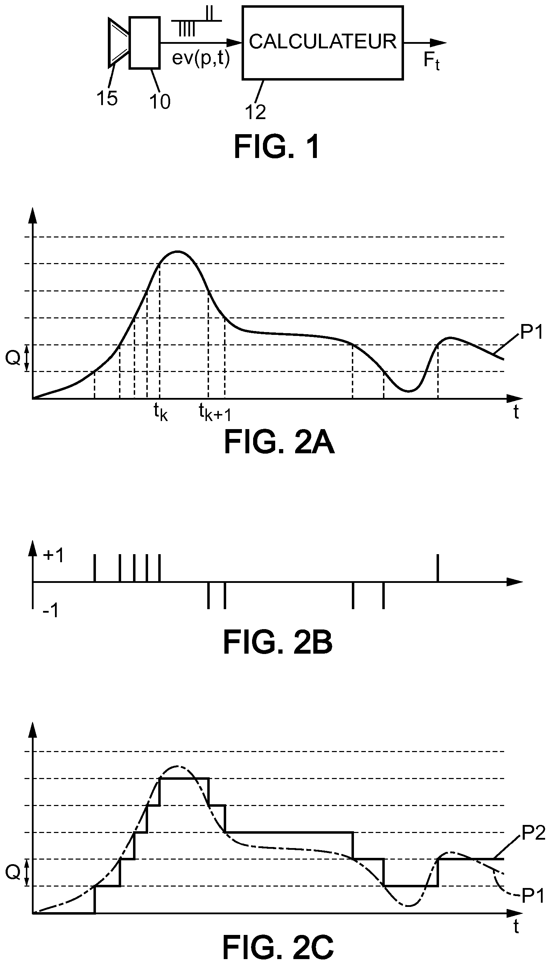

Le dispositif représenté sur la figure 1 comporte un capteur de vision asynchrone basé sur événement 10 placé en regard d'une scène et recevant le flux lumineux de la scène à travers une optique d'acquisition 15 comprenant une ou plusieurs lentilles. Le capteur 10 est placé dans le plan image de l'optique d'acquisition 15. Il comporte un groupement d'éléments photosensibles organisés en une matrice de pixels. Chaque pixel correspondant à un élément photosensible produit des événements successifs dépendant des variations de lumière dans la scène.

Un calculateur 20 traite l'information asynchrone issue du capteur 10, c'est-à-dire les séquences d'événements ev(p, t) reçues de manière asynchrone des différents pixels p, pour en extraire de l'information $F_t$ sur certaines formes évoluant dans la scène. Le calculateur 20 fonctionne sur des signaux numériques. Il peut être implémenté par programmation d'un processeur approprié. Une implémentation matérielle du calculateur 20 à l'aide de circuits logiques spécialisés (ASIC, FPGA, ...) est également possible.

Pour chaque pixel p de la matrice, le capteur 10 engendre une séquence de signal asynchrone basé sur événement à partir des variations de lumière ressenties par le pixel dans la scène apparaissant dans le champ de vision du capteur.

Le capteur asynchrone réalise une acquisition par exemple selon le principe illustré par les figures 2A-C. L'information délivrée par le capteur comprend une succession d'instants $t_k$ (k = 0, 1, 2, ...) auxquels un seuil d'activation Q est atteint. La figure 2A montre un exemple de profil d'intensité lumineuse P1 vue par un pixel de la matrice du capteur. Chaque fois que cette intensité augmente d'une quantité égale au seuil d'activation Q à partir de ce qu'elle était au temps $t_k$, un nouvel instant $t_{k+1}$ est identifié et une raie positive (niveau +1 sur la figure 2B) est émise à cet instant $t_{k+1}$. Symétriquement, chaque fois que l'intensité du pixel diminue de la quantité Q à partir de ce qu'elle était au temps $t_k$, un nouvel instant $t_{k+1}$ est identifié et une raie négative (niveau -1 sur la figure 2B) est émise à cet instant $t_{k+1}$. La séquence de signal asynchrone pour le pixel consiste alors en une succession d'impulsions ou raies (« spikes ») positives ou négatives positionnées dans le temps aux instants $t_k$ dépendant du profil lumineux pour le pixel. Ces raies peuvent être représentées mathématiquement par des pics de Dirac positifs ou négatifs et caractérisées chacune par un instant d'émission $t_k$ et un bit de signe. La sortie du capteur 10 est alors sous la forme d'une représentation adresse-événement (AER, « address-event representation »). La figure 2C montre le profil d'intensité P2 qu'on est capable de reconstruire comme une approximation du profil P1 par intégration dans le temps du signal asynchrone de la figure 2B.

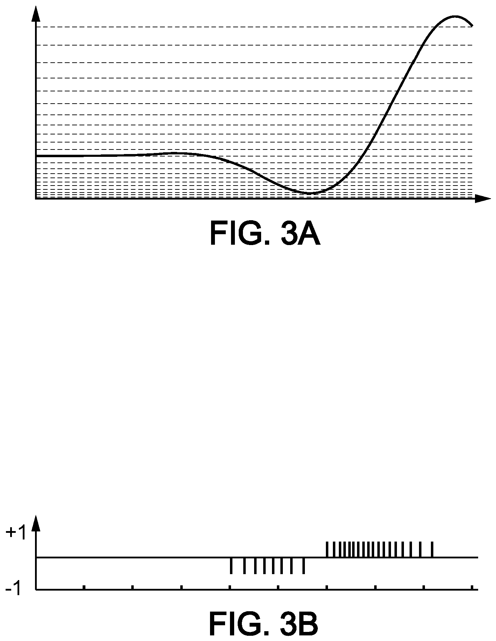

Le seuil d'activation Q peut être fixe, comme dans le cas des figures 2A-C, ou adaptatif en fonction de l'intensité lumineuse, comme dans le cas des figures 3A-B. Par exemple, le seuil ±Q peut être comparé aux variations du logarithme de l'intensité lumineuse pour la génération d'un événement ±1.

À titre d'exemple, le capteur 10 peut être un capteur de vision dynamique (DVS, "Dynamic Vision Sensor") du genre décrit dans «A 128x128 120 dB 15 $\mu$s Latency Asynchronous Temporal Contrast Vision Sensor », P. Lichtsteiner, et al., IEEE Journal of Solid-State Circuits, Vol. 43, No. 2, février 2008, pp. 566-576, ou dans la demande de brevet US 2008/0135731 A1. La dynamique d'une rétine (durée minimum entre les potentiels d'action) de l'ordre de quelques millisecondes peut être approchée avec un DVS de ce type. La performance en dynamique est en tout cas largement supérieure à celle qu'on peut atteindre avec une caméra vidéo classique ayant une fréquence d'échantillonnage réaliste. Il est à noter que la forme du signal asynchrone délivré pour un pixel par le DVS 10, qui constitue le signal d'entrée du calculateur 20, peut être différente d'une succession de pics de Dirac, les événements représentés pouvant avoir une largeur temporelle ou une amplitude ou une forme d'onde quelconque dans ce signal asynchrone basé sur événement.

Un autre exemple de capteur asynchrone avantageusement utilisable dans le contexte de la présente invention est le capteur d'image asynchrone à base temporelle (ATIS, « Asynchronous Time-based Image Sensor ») dont une description est donnée dans l'article « A QVGA 143 dB Dynamic Range Frame-Free PWM Image Sensor With Lossless Pixel-Level Video Compression and Time-Domain CDS », C. Posch, et al., IEEE Journal of Solid-State Circuits, Vol. 46, No. 1, janvier 2011, pp. 259-275.

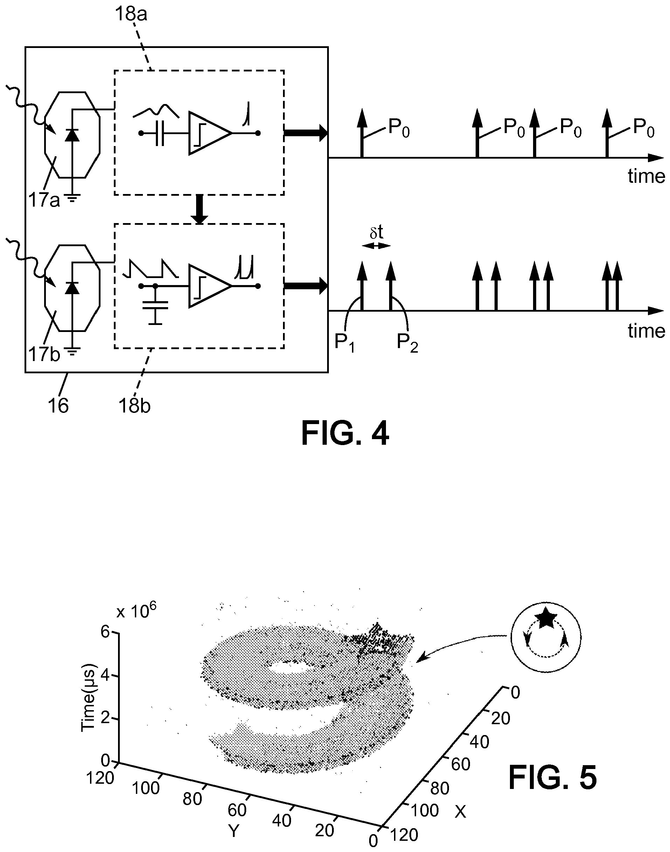

La figure 4 illustre le principe de l'ATIS. Un pixel 16 de la matrice constituant le capteur comporte deux éléments photosensibles 17a, 17b, tels que des photodiodes, respectivement associés à des circuits électroniques de détection 18a, 18b. Le capteur 17a et son circuit 18a ont un fonctionnement similaire à ceux du DVS précédemment mentionné. Ils produisent une impulsion $P_0$ lorsque l'intensité lumineuse reçue par la photodiode 17a varie d'une quantité prédéfinie. L'impulsion $P_0$ marquant ce changement d'intensité déclenche le circuit électronique 18b associé à l'autre photodiode 17b. Ce circuit 18b génère alors une première impulsion $P_1$ puis une deuxième impulsion $P_2$ dès qu'une quantité de lumière donnée (nombre de photons) est reçue par la photodiode 17b. L'écart temporel $\delta t$ entre les impulsions $P_1$ et $P_2$ est inversement proportionnel à l'intensité lumineuse reçue par le pixel 16 juste après l'apparition de l'impulsion $P_0$. L'information asynchrone issue de l'ATIS est une autre forme de représentation AER, comprenant deux trains impulsions pour chaque pixel: le premier train des impulsions $P_0$ indique les instants où l'intensité lumineuse a changé au-delà du seuil de détection, tandis que le second train se compose des impulsions $P_1$ et $P_2$ dont l'écart temporel $\delta t$ indique les intensités lumineuses, ou niveaux de gris, correspondants. Un événement ev(p, t) issu d'un pixel 16 de position p dans la matrice de l'ATIS comporte alors deux types d'information: une information temporelle donnée par la position de l'impulsion $P_0$, donnant l'instant t de l'événement, et une information de niveau de gris donnée par l'écart temporel $\delta t$ entre les impulsions $P_1$ et $P_2$.

Dans le cas où le capteur 10 consiste en une matrice bidimensionnelle de pixels, on peut placer les événements provenant des pixels dans une représentation espace-temps à trois dimensions telle que celle présentée sur la figure 5. Sur cette figure, chaque point repère un événement ev(p, t) engendré de manière asynchrone à un instant t au niveau

$$p = \begin{pmatrix} x \\ y \end{pmatrix},$$

d'un pixel p du capteur, de position par le mouvement d'une étoile tournant à vitesse angulaire constante comme schématisé dans l'encadré A. La majeure partie de ces points se répartissent à proximité d'une surface de forme générale hélicoïdale. En outre, la figure montre un certain nombre d'événements à distance de la surface hélicoïdale qui sont mesurés sans correspondre au mouvement effectif de l'étoile. Ces événements sont du bruit d'acquisition.

Le principe d'un algorithme ICP est d'utiliser un ensemble de points formant un modèle représentant la forme d'un objet, par exemple décrivant le contour de cet objet, pour le faire correspondre avec un ensemble de points fourni par des données d'acquisition, puis de calculer la relation géométrique entre cet ensemble de points et le modèle par minimisation d'une fonction d'erreur.

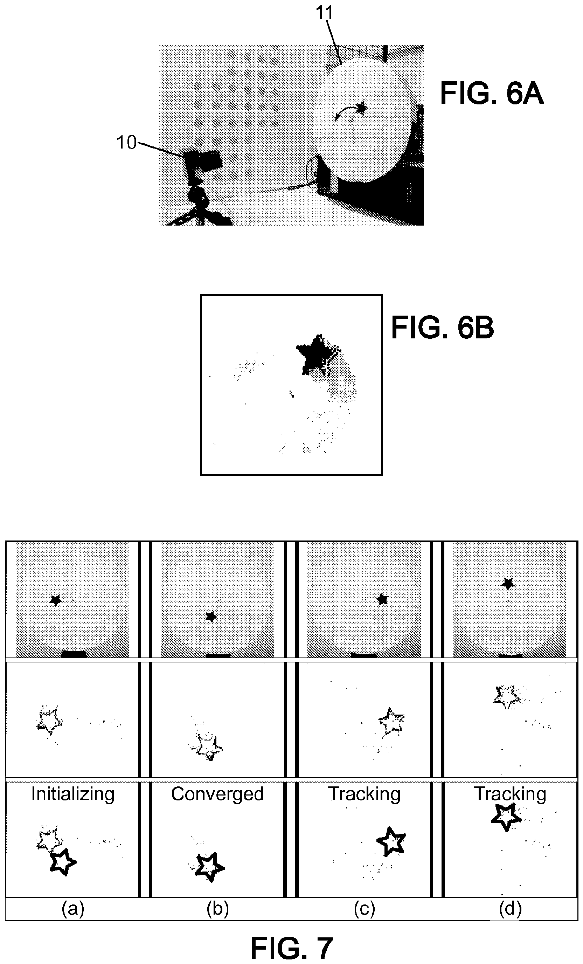

La figure 6A montre de l'équipement utilisé dans une expérimentation de l'invention, le capteur 10, par exemple de type DVS ou ATIS, étant placé en face d'un plateau tournant 11 sur lequel est dessinée une forme d'étoile. Le capteur 10 acquiert des données à partir de la rotation de la forme en étoile sur le plateau. À titre simplement de comparaison et d'illustration, la figure 6B montre schématiquement les événements observés au cours d'un intervalle de temps de l'ordre de quelques microsecondes, en superposition sur la forme noire de l'étoile.

La figure 7 montre, à titre d'illustration, un exemple de poursuite de la forme en étoile. Sur cette figure, la rangée du haut est une séquence d'images conventionnelle montrant l'étoile en rotation sur son plateau, comme dans le cas de la figure 6A. La rangée du milieu montre des cartes d'accumulation d'événements, c'est-à-dire la projection de tous les événements survenus au cours d'une période de temps sur un plan, indépendamment des instants précis de détection des événements dans la période de temps. Enfin, la rangée du bas montre la mise en correspondance du modèle (montré en trait plein) avec les points d'acquisition. Dans la colonne de gauche (a), on voit un état initial où l'étoile commence sa rotation. L'algorithme essaie de faire correspondre le modèle avec les événements les plus proches. Une position initiale du modèle pas trop éloignée des événements est utile pour que l'algorithme converge vers le minimum global. Dans la colonne (b), l'étoile passe à proximité de la position initiale du modèle, et celui-ci converge vers la position de l'étoile. Enfin, dans les colonnes (c) et (d), l'étoile continue à tourner et le modèle est mis à jour en lui appliquant une rotation $R_{\Delta\theta}$ et une translation $\Delta T$ dont les paramètres sont calculés par minimisation d'une fonction erreur.

Dans le cas où la scène est observée par un capteur asynchrone basé sur événement plutôt que par une caméra conventionnelle, les événements sont reçus avec une datation précise au fur et à mesure qu'ils se produisent. Un algorithme de type ICP n'a pas besoin d'attendre de disposer d'informations sur la totalité de l'étendue de la scène pour pouvoir traiter simultanément tous les événements qu'elle contient.

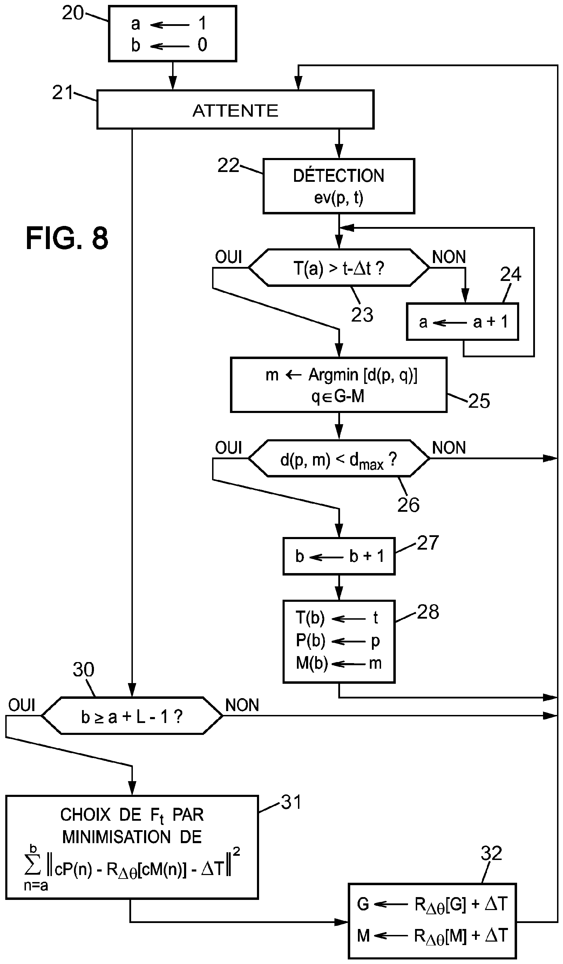

Un événement ev(p, t) décrit une activité dans le domaine spatio-temporel. Dans la version basée sur événement de l'algorithme ICP illustrée sur la figure 8, on considère, de façon semblable aux neurones biologiques, que chaque événement exerce une influence pendant un certain laps de temps après son apparition. Cette propriété temporelle des événements peut être introduite sous la forme d'une fonction de persistance. On note alors S(t) l'ensemble spatio-temporel des événements qui sont actifs à un instant t:

$$S(t) = \{ \ ev(p, t') \ / \ 0 < t - t' \leq \Delta t \ \} \qquad (2)$$

où $\Delta t$ est un temps de persistance. Après que l'intervalle de temps $\Delta t$ s'est écoulé suite à l'activation d'un événement, cet événement est éliminé de l'ensemble S(t).

La mise en correspondance des points entre le modèle et les données d'acquisition constitue l'étape la plus exigeante en ressources de calcul. On note G(t) l'ensemble des positions des points du modèle bidimensionnel définissant la forme de l'objet à un instant t. L'association entre les points d'acquisition et les points du modèle peut être effectuée de manière séquentielle. Chaque fois qu'un nouvel événement est activé, on le fait correspondre à un élément de G(t), de préférence à un élément de G(t) qui n'a pas été déjà associé à un événement de S(t). On peut ajouter à cette étape la vérification d'un critère de distance afin de rejeter du bruit ou d'autres points qui ne font pas partie de la forme recherchée.

Étant donné que le capteur est asynchrone, le nombre de points associés varie assez fortement. Il y a typiquement de quelques points à quelques centaines de points associés au cours du temps de persistance $\Delta t$. Ceci est très différent de l'approche classique à base de trames. Les objets immobiles ne génèrent aucun stimulus de sorte qu'il n'est pas nécessaire de mettre à jour leur position. Lorsque la scène comporte peu de mouvement, il n'est utilisé qu'une faible quantité de ressources de calcul, tandis que dans les situations hautement dynamiques, l'algorithme requiert sa pleine capacité pour mettre à jour les informations.

Dans l'exemple de la figure 8, on note P(n) et T(n) la position et le temps de détection du n-ième événement retenu pour la mise à jour des informations de position du modèle, et M(n) le point du modèle associé à ce n-ième événement. Les temps de détection T(n) sont initialisés à des valeurs arbitrairement grandes avant de démarrer l'algorithme (T(n) = +∞). Lors de la détection d'un événement ev(p, t) au temps t, l'index entier a désigne l'événement le plus ancien dans S(t) tandis que l'index entier b désigne l'événement le plus récent dans S(t), soit S(t) = {ev(P(a), T(a)), ev(P(a+1), T(a+1)), ..., ev(P(b), T(b))}. Le modèle G(t) est simplement noté G, et on note M l'ensemble des points du modèle qui ont été associés aux événements de S(t), soit M = {M(a), M(a+1), ...,M(b)}. A l'initialisation de l'algorithme (étape 20), les index entiers a et b sont respectivement initialisés à 1 et à 0.

Dans la version de l'algorithme représentée sur la figure 8, la transformation spatiale $F_t$ qui fait correspondre les points du modèle avec les positions des événements détectés est estimée périodiquement, par une solution classique en forme analytique, par exemple par décomposition en valeurs singulières (SVD, "singular value decomposition"). À l'étape 21, l'algorithme attend les nouveaux événements en provenance du capteur 10 tant que la période de mise à jour de la transformation spatiale n'est pas écoulée.

Suite à la réception d'un événement ev(p, t) en provenance d'un pixel de position p dans la matrice au temps t (étape 22), deux opérations sont effectuées: mise à jour de l'ensemble S(t) et association à l'événement détecté d'un point du modèle G. Dans la boucle 23-24, les événements datant de plus que $\Delta t$ sont éliminés de S(t): le test 23 regarde si le temps T(a) est supérieur à t - $\Delta t$. Si T(a) n'est pas supérieur à t - $\Delta t$, le nombre a est incrémenté d'une unité à l'étape 24 et le test 23 est réitéré. Les événements trop anciens sont éliminés lorsque T(a) > t - $\Delta t$ au test 23.

L'algorithme procède alors à l'association d'un point de G au nouvel événement à l'étape 25. Ce point associé est celui dont la position m est la plus proche du pixel p d'où provient l'événement ev(p, t) parmi les points du modèle qui n'ont pas déjà été associés à un point de l'ensemble S(t), c'est-à-dire parmi les points de l'ensemble G-M:

$$m = \underset{q \in G-M}{Arg \ min} \left[ d(p,q) \right] \qquad (3)$$

Le critère de distance d(.,.) utilisé à cette étape 25 est par exemple la distance euclidienne dans le plan de la matrice. Avant de décider si l'événement ev(p, t) sera inclus dans l'ensemble S(t), l'algorithme examine à l'étape 26 si la distance minimisée est inférieure à un seuil $d_{max}$. À titre d'exemple, on peut choisir le seuil $d_{max}$ comme correspondant à 6 pixels. Une valeur de seuil différente peut naturellement être retenue si des essais montrent que cela convient mieux à une application particulière. Si $d(p, m) \geq d_{max}$, l'événement est écarté et l'algorithme revient à l'étape 21 d'attente du prochain événement.

Si l'événement est attribué à l'objet recherché (d(p, m) < $d_{max}$ au test 26), l'index b est incrémenté d'une unité à l'étape 27, puis le temps de détection t, la position p de cet événement et le point m du modèle qui vient de lui être associé sont enregistrés en tant que T(b), P(b) et M(b) à l'étape 28. Le traitement consécutif à la détection de l'événement ev(p, t) est alors terminé et l'algorithme revient à l'étape 21 d'attente du prochain événement.

À l'expiration de la période de mise à jour de la transformation spatiale, un test 30 est effectué pour s'assurer qu'un nombre suffisant d'événements se trouvent dans l'ensemble S(t) pour contribuer à la mise à jour, par exemple L = 5 événements. Ainsi, si b < a + L - 1 (test 30), aucune mise à jour n'est effectuée et l'algorithme revient à l'étape 21 d'attente du prochain événement.

S'il y a suffisamment d'événements (b ≥ a + L - 1), une opération de minimisation 31 est effectuée pour choisir un angle de rotation $\Delta\theta$ et un vecteur de translation $\Delta T$ dans le cas où la transformation spatiale $F_t$, qu'on recherche à partir du modèle G, est la combinaison d'une rotation $R_{\Delta\theta}$ d'angle $\Delta\theta$ et d'une translation de vecteur $\Delta T$.

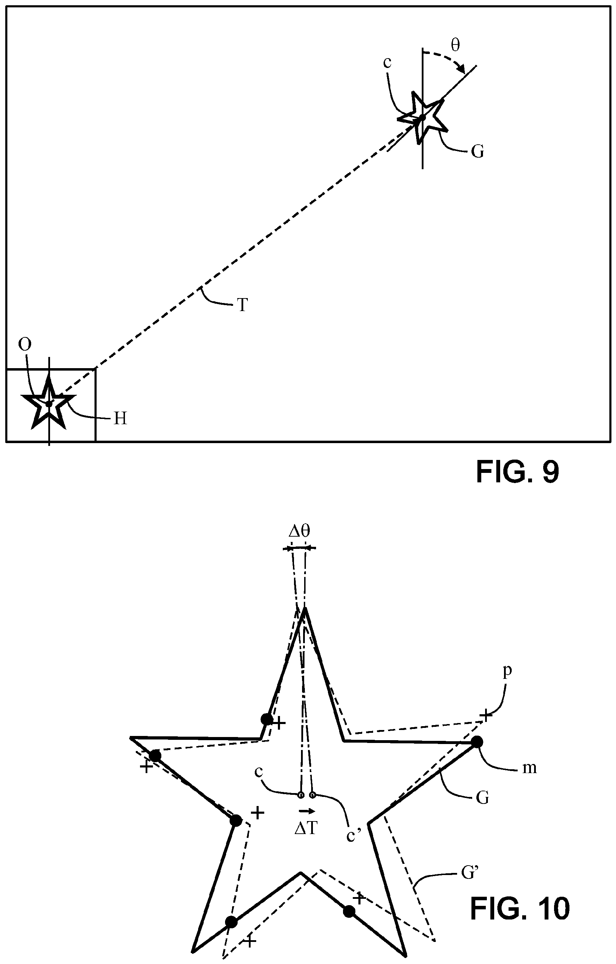

La figure 9 précise les notations utilisées ici. On note H le motif de points définissant la forme poursuivie dans la scène, placé à une position fixe, et O le centre de gravité de cet ensemble de points H. À un instant t, ce motif H s'est déplacé selon une translation de vecteur T et une rotation d'angle $\theta$ autour de son centre de gravité O, ce qui donne le modèle G = G(t) auquel il est fait référence lors du traitement d'un événement reçu au temps t. Le traitement donne lieu à l'estimation de variations $\Delta\theta$, $\Delta T$ de l'angle de rotation $\theta$ et du vecteur de translation T.

L'opération de minimisation 31 consiste à trouver les paramètres $\Delta\theta$, $\Delta T$ qui minimisent un critère de distance tel que par exemple une somme de la forme:

$$\sum_{n=a}^{b} \left\| cP(n) - R_{\Delta\theta}[cM(n)] - \Delta T \right\|^2 \tag{4}$$

qui est un cas particulier de l'expression (1) où les paramètres à estimer sont l'angle $\Delta\theta$ de la rotation $R_{\Delta\theta}$, définie par la matrice $R_{\Delta\theta} = \begin{bmatrix} \cos\Delta\theta & -\sin\Delta\theta \\ \sin\Delta\theta & \cos\Delta\theta \end{bmatrix}$, et les coordonnées du vecteur $\Delta T$. Dans l'expression (4), les notations cP(n) et cM(n) représentent les vecteurs ayant pour origine le centre c de la rotation $R_{\Delta\theta}$ et pointant respectivement vers P(n) et M(n). La position du centre c de la rotation $R_{\Delta\theta}$ peut être définie par rapport au modèle G(t). Par exemple, on peut placer le point c au centre de gravité des points du modèle G(t), comme représenté sur la figure 9 (le vecteur T de la translation globale est alors égal au vecteur Oc).

La transformation spatiale $F_t$ composée de la rotation $R_{\Delta\theta}$ et de la translation $\Delta T$ est ici celle qui déplace le modèle G(t) pour l'amener au plus près des pixels où ont été détectés des événements récemment pris en compte, c'est-à-dire des événements de l'ensemble S(t). C'est ce que montre la figure 10, où les signes + représentent les positions des pixels P(n) où ont été détectés les événements de S(t), les signes • représentent les positions des points M(n) du modèle G qui ont été associés à ces événements, et G' représente le prochain modèle, de centre c', qui place les points M(n) au plus près des pixels P(n) et résulte d'un déplacement de G selon la rotation $R_{\Delta\theta}$ et la translation de vecteur $\Delta T$.

La rotation $R_{\Delta\theta}$ et la translation $\Delta T$ qui minimisent le critère (4) traduisent le mouvement de la forme correspondant au modèle G entre l'instant de mise à jour de la transformation spatiale et le précédent instant de mise à jour. À l'étape 32, la même transformation est appliquée aux points des ensembles G et M pour mettre à jour ces deux ensembles. Chaque position X du modèle G (ou de l'ensemble M) est remplacée par une position Y telle que cY = $R_{\Delta\theta}[cX]$ + $\Delta T$. Après cette étape 32, l'algorithme revient à l'étape 21 d'attente du prochain événement.

Les transformations spatiales $F_t$ ainsi caractérisées par les angles $\Delta\theta$ des rotations $R_{\Delta\theta}$ successivement estimées et par les vecteurs de translation $\Delta T$ correspondants représentent les mouvements de la forme poursuivie dans la scène. Leurs paramètres sont les sorties du calculateur 20 de la figure 1. Il est possible d'accumuler les valeurs $\Delta\theta$ et $\Delta T$ successivement déterminées pour obtenir les angles $\theta$ et les vecteurs de translation T définis par rapport à la position de référence fixe de la forme H.

Le mode de réalisation illustré par la figure 8 permet de contrôler la fréquence de mise à jour des informations de poursuite de la forme recherchée dans la scène, c'est-à-dire des paramètres de la transformation spatiale $F_t$. Typiquement, cette fréquence de mise à jour correspond à une périodicité comprise entre 10 $\mu$s et 1 ms. Elle peut donc être beaucoup plus rapide que les fréquences de trames des caméras classiques.

Le temps de persistance $\Delta t$ est réglé en fonction du contenu dynamique de la scène. Dans une implémentation à base de calculs SVD, il est souhaitable que l'intervalle de temps $\Delta t$ soit suffisamment long pour que l'ensemble S(t) garde un contour complet de l'objet mobile recherché, de façon que presque tous les points de se contour puissent être mis en correspondance avec des événements. D'un autre côté, une durée $\Delta t$ trop longue augmente la charge de calcul, et ne permet pas de bien poursuivre des objets rapides. La durée $\Delta t$ est typiquement choisie entre 10 $\mu$s et 20 ms.

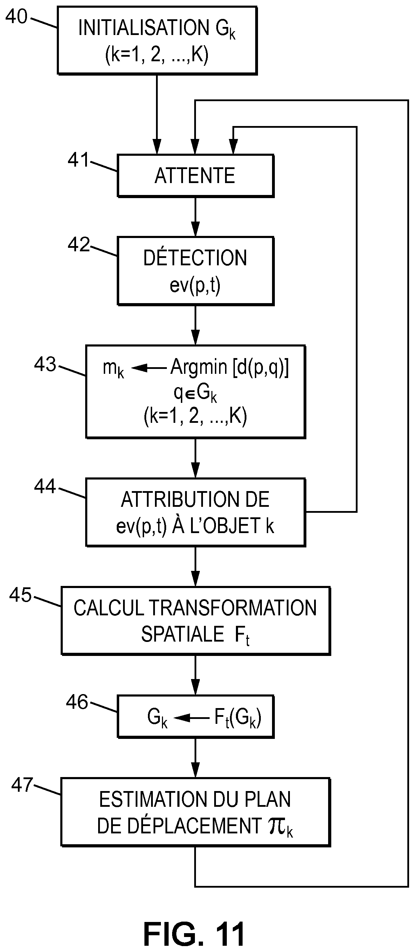

Une autre approche de la poursuite de forme dans la scène vue par le capteur asynchrone 10 est illustrée par la figure 11. Dans cette approche, qui fournit une meilleure dynamique tout en requérant moins de calculs, la transformation spatiale $F_t$ qui permet de mettre à jour le modèle mis à jour est déterminée en fonction du pixel p de la matrice d'où provient un événement détecté ev(p, t) (pour autant que cet événement a été attribué à l'objet recherché) et du point m associé, de manière indépendante des associations effectuées avant la détection de l'événement ev(p, t).

Dans la représentation de la figure 11, on considère qu'un nombre K d'objets sont recherchés dans la scène observée par le capteur asynchrone. Ces objets sont numérotés par un entier k (k = 1, 2, ..., K), et chacun a un modèle de points noté $G_k(t)$ ou simplement $G_k$. Le cas fréquent où un seul objet est poursuivi est inclus en prenant K = 1.

Pour amorcer la poursuite de chaque objet k, son modèle $G_k$ est initialisé (étape 40) avec un positionnement assez proche de celui de cet objet dans le champ de vision du capteur 10. Puis, à l'étape 41, l'algorithme attend les nouveaux événements en provenance du capteur 10.

Suite à la réception d'un événement ev(p, t) en provenance d'un pixel de position p dans la matrice au temps t (étape 42), une étape 43 d'association d'un point $m_k$ du modèle $G_k$ à l'événement détecté est effectuée pour chaque objet k (k = 1, 2, ..., K). Pour chaque objet k, cette étape 43 est identique à l'étape 25 précédemment décrite en référence à la figure 8, à ceci près que le point $m_k$ du modèle $G_k$ qui minimise le critère de distance $d(m_k, p)$ est choisi sans exclure des points antérieurement associés à des événements, l'algorithme ne mémorisant pas les associations antérieures à l'événement ev(p, t).

À l'étape 44, l'événement ev(p, t) qui a été détecté à l'étape 42 est attribué à un objet k ou, à défaut, exclu comme n'étant pas en relation avec le mouvement d'un objet poursuivi dans la scène. Si l'événement ev(p, t) n'est attribué à aucun objet, l'algorithme revient à l'étape 41 d'attente du prochain événement. En cas d'attribution à un objet k, la transformation spatiale $F_t$ est calculée à l'étape 45 pour le modèle $G_k$ de cet objet.

Plusieurs tests ou filtrages peuvent être effectués à l'étape 44 pour prendre la décision d'attribuer ou non l'événement ev(p, t) à un objet k.

Le plus simple est de procéder comme à l'étape 26 décrite plus haut en référence à la figure 8, par comparaison de la distance $d(m_k, p)$ à un seuil $d_{max}$. Si $d(m_k, p) < d_{max}$, l'association du pixel p au point $m_k$ du modèle $G_k$ est confirmée, et si aucun objet ne remplit cette condition, aucune attribution n'est effectuée. Il se peut toutefois que plusieurs objets poursuivis remplissent cette condition, l'un étant susceptible d'occulter l'autre. Pour résoudre ces cas ambigus, incluant les cas d'occlusion entre objets, plusieurs techniques sont applicables, utilisant soit des contraintes spatiales, soit des contraintes temporelles. Ces techniques seront examinées plus loin.

Un autre traitement qui peut intervenir à l'étape 44 est une prise en compte du mouvement éventuel du fond. En particulier, si le capteur asynchrone 10 est lui-même en mouvement, le fond fixe est en déplacement relatif et engendre la détection de nombreux événements qui sont à exclure des traitements relatifs à la poursuite des objets d'intérêt. Une manière de prendre en compte le mouvement du fond sera décrite plus loin.

Une fois que l'événement ev(p, t) a été attribué à un objet k, les paramètres de la transformation spatiale $F_t$ sont calculés à l'étape 45 puis cette transformation $F_t$ est appliquée au modèle $G_k$ pour mettre à jour celui-ci à l'étape 46. Enfin, un plan de déplacement de l'objet k, noté $\Pi_k$, est estimé à l'étape 47. L'algorithme revient ensuite à l'étape 41 d'attente du prochain événement.

Se limiter à un événement courant p associé à un point m du modèle $G_k$ pour calculer une transformation spatiale $F_t$ conduit à introduire une composante de fonction coût f :

$$ f = d[p, F_t(m)] \tag{5} $$

où d[., .] est une mesure de distance dans le plan de la matrice de pixels. Cela peut notamment être une distance quadratique.

Si on considère des transformations spatiales rigides pour la mise à jour du modèle $G_k$, il faut déterminer l'angle $\Delta\theta$ d'une rotation $R_{\Delta\theta}$ de centre c donné et le vecteur $\Delta T$ d'une translation, la composante de fonction coût avec une distance quadratique s'écrit :

$$ f = \left\| cp - R_{\Delta\theta}[cm] - \Delta T \right\|^2 \tag{6} $$

où cp et cm désignent les vecteurs ayant pour origine le centre c de la rotation $R_{\Delta\theta}$ et pointant respectivement vers les points p et m.

Cette composante f peut être minimisée pour une infinité de couples $(\Delta\theta, \Delta T)$, puisque pour n'importe quel angle $\Delta\theta$, le choix $\Delta T = cp - R_{\Delta\theta}[cm]$ donne f = 0. L'objectif est de minimiser une fonction coût globale dont f n'est qu'une composante. Cependant, cette composante f permet une estimation de termes de gradient $\nabla_\theta f$, $\nabla_T f$ par rapport à l'angle de rotation $\theta$ (ou $\Delta\theta$) et au vecteur de translation T (ou $\Delta T$), pour effectuer une sorte de descente de gradient lors de la mise à jour du modèle $G_k$. En d'autres termes, on retient pour la transformation spatiale $F_t$ des valeurs de paramètres :

$$\Delta T = -\eta_1 . \nabla_T f(\Delta\theta_0, \Delta T_0) \qquad (7)$$

$$\Delta\theta = -\eta_2 . \nabla_\theta f(\Delta\theta_0, \Delta T_0) \qquad (8)$$

où $\eta_1$ et $\eta_2$ sont des pas de convergence positifs prédéfinis. À titre d'exemple, on peut prendre $\eta_1 = 0{,}25$ et $\eta_2 = 0{,}025$ pour obtenir une bonne sensibilité. Les valeurs appropriées de $\eta_1$ et $\eta_2$ sont à ajuster pour chaque application, au besoin par quelques simulations ou expérimentations. Dans (7) et (8), les dérivées partielles $\nabla_\theta f$, $\nabla_T f$ sont prises pour des valeurs adéquates $\Delta\theta_0$, $\Delta T_0$ de l'angle de rotation et du vecteur de translation.

Les dérivées partielles de f ont pour expression :

$$\nabla_T f(\Delta\theta_0, \Delta T_0) = 2(\Delta T_0 - cp + R_{\Delta\theta_0}[cm]) \qquad (9)$$

$$\nabla_\theta f(\Delta\theta_0, \Delta T_0) = 2(\Delta T_0 - cp)^T R_{\Delta\theta_0 + \pi/2}[cm] \qquad (10)$$

où $(.)^T$ représente l'opération de transposition et $R_{\Delta\theta_0 + \pi/2} = \begin{bmatrix} -\sin\Delta\theta_0 & -\cos\Delta\theta_0 \\ \cos\Delta\theta_0 & -\sin\Delta\theta_0 \end{bmatrix}$. Ces dérivées partielles sont à calculer pour des valeurs particulières de $\Delta T_0$ et $\Delta\theta_0$. Les résultats $\nabla_T f(\Delta\theta_0, \Delta T_0)$, $\nabla_\theta f(\Delta\theta_0, \Delta T_0)$ sont ensuite injectés dans (7) et (8) pour obtenir les paramètres $\Delta T$ et $\Delta\theta$ utilisés à l'étape 46 pour mettre à jour le modèle $G_k$.

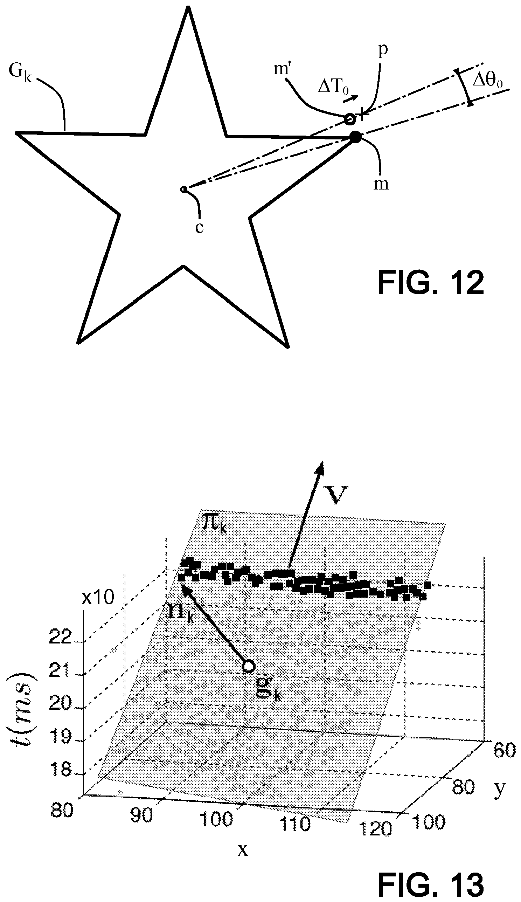

Dans une réalisation du procédé, les dérivées partielles sont calculées selon (9) et (10) en prenant pour $\Delta\theta_0$ l'angle $\widehat{mcp}$ et pour $\Delta T_0$ le vecteur cp - cm', avec cm' = $R_{\Delta\theta_0}[cm]$. Cet angle de rotation $\Delta\theta_0$ et ce vecteur de translation $\Delta T_0$, si on les appliquait au point m, le feraient coïncider avec le lieu p de l'événement ev(p, t), comme l'illustre la figure 12. Dans cette réalisation du procédé, l'étape 45 consiste donc à prendre $\Delta\theta_0 = \widehat{mcp}$ et $\Delta T_0$ = cp - $R_{\Delta\theta_0}[cm]$, à calculer les gradients $\nabla_T f(\Delta\theta_0, \Delta T_0)$, $\nabla_\theta f(\Delta\theta_0, \Delta T_0)$ selon (8)-(9) puis les paramètres $\Delta T$, $\Delta\theta$ de la transformation spatiale $F_t$ selon (6)-(7).

D'autres choix sont possibles pour le calcul (9)-(10), par exemple $\Delta\theta_0 = 0$ et $\Delta T_0$ = mp (simple translation qui amène m sur p), ou encore $\Delta\theta_0 = \Delta T_0 = 0$. Les déplacements élémentaires entre deux itérations étant de faible amplitude, le point précis $(\Delta T_0, \Delta\theta_0)$ où les dérivées partielles (9)-(10) sont calculées n'a probablement pas beaucoup d'influence s'il est choisi à (0, 0) ou en rapport avec la distance entre m et p. En outre, ce choix varie selon la convention de choix du centre c de la rotation. Le centre de rotation c est typiquement le centre de gravité des points du modèle $G_k$, mais ce n'est pas obligatoire.

Dans de nombreuses applications du procédé, la transformation spatiale $F_t$ peut être représentée par la combinaison d'une rotation et d'une translation comme décrit précédemment. Des variantes sont cependant possibles en admettant des déformations du modèle $G_k$ d'un objet.

En particulier, il est possible de prendre en compte des transformations affines $F_t$. Ceci permet la prise en compte de mouvements tridimensionnels de l'objet recherché, et non seulement de mouvements limités au plan image. La matrice affine 2D découle d'une matrice de rotation $R_{\Delta\theta}$ par l'application de facteurs d'échelle $s_x$, $s_y$ le long des deux axes. Ceci revient à chercher à mettre en correspondance les points m et p selon une relation de la forme

$$cp = R_{\Delta\theta} \cdot \begin{bmatrix} s_x & 0 \\ 0 & s_y \end{bmatrix} . cm + \Delta T,$$

où le point c peut de nouveau être pris au centre de gravité des points du modèle $G_k$. Par un calcul des dérivées partielles de la composante de fonction coût f par rapport aux facteurs d'échelle $s_x$, $s_y$, le même principe de descente de gradient peut être appliqué pour l'estimation de ces facteurs d'échelle. En première approximation, on peut se donner un autre pas de convergence $\eta_3$, et prendre:

$$s_x = 1 + \eta_3.( \, |p_x| - |m_x| \, ) \qquad\qquad (11)$$

$$s_y = 1 + \eta_3.( \, |p_y| - |m_y| \, ) \qquad\qquad (12)$$

pour compléter l'estimation de $\Delta T$ et $\Delta\theta$ selon (6) et (7). Dans les expressions (11) et (12), $|p_x|$ et $|p_y|$ sont les valeurs absolues des coordonnées du vecteur cp, et $|m_x|$ et $|m_y|$ sont les valeurs absolues des coordonnées du vecteur cm.

Dans le cas où l'objet k poursuivi dans le signal asynchrone du capteur est simplement une arête se déplaçant à une vitesse constante $v = \begin{pmatrix} v_x \\ v_y \end{pmatrix}$, la figure 13 indique les événements attribués à cette arête dans un espace à trois dimensions, à savoir les deux dimensions spatiales x, y correspondant aux deux directions de la matrice 2D de pixels et la dimension temporelle t. L'arête balaie un plan $\Pi_k(t)$ suivant un vecteur vitesse V compris dans ce plan et proportionnel

à $\begin{pmatrix} v_x \\ v_y \\ 1 \end{pmatrix}$. Dans la pratique, le bruit d'acquisition et les éventuelles erreurs d'attribution d'événements à l'objet font qu'il existe une certaine dispersion des événements autour du plan $\Pi_k(t)$ qui s'entend comme un plan moyen parcouru par les événements récemment attribués à l'objet.

Le plan $\Pi_k(t)$, ou $\Pi_k$ si on omet l'index temporel t pour alléger les notations, peut être défini par l'un quelconque de ses points $g_k(t)$, ou $g_k$, et un vecteur $n_k(t)$, ou $n_k$, donnant la direction de sa normale. Dans la représentation de la figure 13, le point $g_k$ coïncide avec le centre de gravité des événements attribués à l'objet k entre les instants t - $\Delta t$ et t, avec $\Delta t$ = 40 ms. Un ajustement par moindres carrés peut être utilisé pour estimer le vecteur $n_k$ et un point gk du plan $\Pi_k$ en minimisant le cumul des distances entre le plan $\Pi_k$ et les événements attribués à l'objet k entre les instants t - $\Delta t$ et t, notamment par une technique d'analyse par composantes principales (PCA, « Principal Component Analysis »).

Ce calcul de minimisation est effectué à l'étape 47 pour estimer le plan $\Pi_k$ qui est représentatif du déplacement instantané de l'objet k.

Pour davantage de détails sur la manière de déterminer le plan de déplacement $\Pi_k$, on pourra se reporter à l'article « Event-based Visual Flow », de R. Benosman, et al., IEEE Transaction On Neural Networks and Learning Systems, Vol. 25, No. 2, septembre 2013, pp. 407-417, ou à la demande de brevet WO 2013/093378 A1.

Dans le cas où l'objet poursuivi n'est pas une simple arête, mais un objet dont la forme vue par le capteur s'étend suivant deux dimensions, il est également possible de déterminer le plan de déplacement $\Pi_k$ par minimisation du cumul des distances entre les événements récents affectés à l'objet k et le plan défini par ses paramètres $n_k$, $g_k$. Dans la représentation espace-temps à trois dimensions, ce plan $\Pi_k$ traduit le déplacement local de l'objet k dans son ensemble.

Le plan de déplacement $\Pi_k$ estimé pour un objet k est utilisable de plusieurs manières à l'étape 44 de la figure 11 pour décider d'attribuer ou non un nouvel événement ev(p, t) à l'objet k.

Revenant à cette étape 44, elle peut notamment comprendre, dans le cas où plusieurs objets sont poursuivis (K > 1), la résolution des cas d'occlusion, ou plus généralement des cas d'ambiguïté entre plusieurs objets pour l'attribution d'un événement. À l'étape 43, les distances respectives $d(m_k, p)$ entre l'événement ev(p, t) et les points $m_k$ les plus proches des modèles $G_k$ des différents objets poursuivis ont été calculées. Si seulement une de ces distances $d(m_k, p)$ est inférieure à un seuil $d_{th}$, par exemple $d_{th}$ = 3 pixels, alors l'événement est attribué à cet objet. Dans le cas contraire, il est considéré comme un événement ambigu, attribuable à plusieurs objets différents.

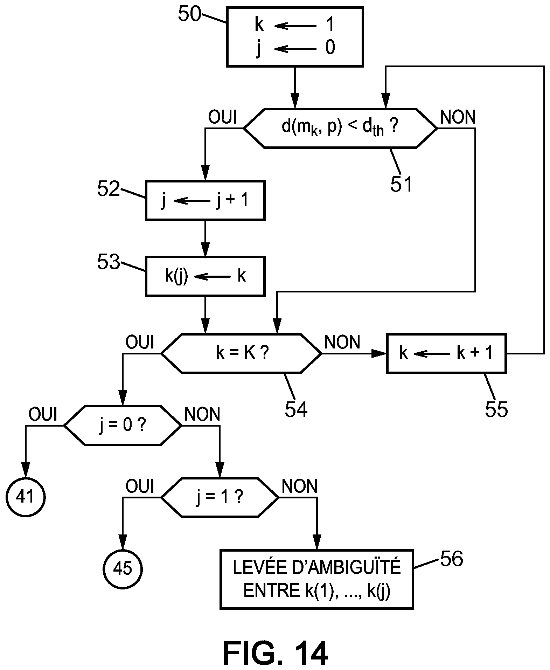

Ce traitement est illustré par la figure 14. Il commence à l'étape 50 par une initialisation d'index k et j à 1 et 0, respectivement. Il est examiné lors du test 51 si la distance $d(m_k, p)$ qui a été minimisée à l'étape 43 est inférieure au seuil $d_{th}$ et dans l'affirmative, l'index j est incrémenté d'une unité à l'étape 52 et la j-ième entrée d'un tableau k(j) est prise égale à k à l'étape 53. Après l'étape 53, ou quand $d(m_k, p) \geq d_{th}$ lors du test 51, il est examiné lors du test 54 si tous les objets ont été parcourus (k = K). Si k < K, le test 54 est suivi par une incrémentation d'une unité de l'index k à l'étape 55 puis par un retour au prochain test 51. Quand k = K au test 54, l'entier j est évalué. Si j = 0, aucun objet n'est considéré comme ayant son modèle assez proche de l'événement détecté ev(p, t), et l'événement est rejeté (retour à l'étape 41 de la figure 11). Si j = 1, l'événement ev(p, t) est attribué à l'objet k = k(1) (passage à l'étape 45 de la figure 11). Si j > 1, il faut procéder à une levée d'ambiguïté 56 entre les objets k(1), ..., k(j).

La prise en compte de contraintes spatiales dans la levée des ambiguïtés 56 peut s'opérer suivant plusieurs stratégies :

- *Attribuer au plus proche* : un nouvel événement ev(p, t) est attribué à l'objet k (parmi k(1), ..., k(j)) dont le modèle $G_k$ est le plus proche, c'est-à-dire celui qui minimise $d(m_k, p)$. En théorie, cette stratégie fonctionne correctement si le nouvel événement correspond parfaitement au modèle $G_k$ et si les données ne contenaient pas de bruit et en l'absence d'ambiguïté due aux occlusions ;

- *Rejeter tous* : cette approche ignore simplement les événements ambigus, c'est-à-dire que les étapes 45-47 de la figure 11 ne sont pas exécutées pour l'événement ev(p, t). Cette approche paraît logique puisqu'a priori il n'est pas possible de prendre une décision claire. Néanmoins, la poursuite peut échouer dans la mesure où la dynamique de la forme risque d'être perdue ;

- *Mettre à jour tous* : tous les modèles $G_k$ avoisinant un événement ambigu ev(p, t) sont mis à jour. En d'autres termes, les étapes 45-47 de la figure 11 sont exécutées pour chaque objet k tel que $d(m_k, p) \leq d_{th}$ ;

- *Mise à jour pondérée* : un événement ambigu ev(p, t) contribue à chaque modèle avoisinant $G_k$ avec une pondération variant en sens contraire de la distance. En d'autres termes, les étapes 45-47 de la figure 11 sont exécutées pour chaque objet k tel que $d(m_k, p) \leq d_{th}$ avec un coefficient de pondération respectif $\alpha_k$ calculé comme une fonction décroissante de la distance $d(m_k, p)$, par exemple inversement proportionnel à $d(m_k, p)$) et tel que $\sum \alpha_k = 1$.

La très haute résolution temporelle du processus d'acquisition basé sur événement fournit une information supplémentaire pour la résolution des situations ambiguës. On peut déterminer une cadence d'événements courante $r_k$ pour chaque forme poursuivie $G_k$, qui contient de l'information sur l'objet k et code en partie la dynamique de cet objet.

On note ici $t_{k,0}, t_{k,1}, ..., t_{k,N(k)}$ les étiquettes temporelles des événements les plus récents, au nombre de N(k)+1, qui ont été attribués à un objet k au cours d'une fenêtre temporelle dont la longueur $\Delta t$ peut être de l'ordre de quelques millisecondes à quelques dizaines de millisecondes, avec $t_{k,0} < t_{k,1} < ... < t_{k,N(k)}$ (l'événement détecté à $t_{k,N(k)}$ est donc le plus récent pour l'objet k). Ces étiquettes temporelles permettent de calculer pour chaque objet k une moyenne glissante de la cadence d'événements $r_k$, définie par :

$$r_k = \frac{N(k)}{t_{k,N(k)} - t_{k,0}} \qquad (13)$$

Ce calcul de la cadence d'événements courante $r_k$ peut intervenir dès qu'un événement a été attribué à l'objet k (étape 44) suite à la détection de cet événement à l'instant $t_{k,N(k)}$.

Ensuite, lorsqu'un prochain événement ev(p, t) donne lieu à une ambiguïté entre plusieurs objets poursuivis, l'étape 44 peut comporter le calcul d'un score $C_k$ pour chaque objet k auquel l'événement ambigu ev(p, t) est attribuable, selon l'expression :

$$C_k = (t - t_{k,N(k)}) \, r_k \qquad (14)$$

Ce score $C_k$ permet d'évaluer la cohérence temporelle de l'événement ambigu ev(p, t) avec chaque objet k. on peut s'attendre à ce que la durée $t - t_{k,N(k)}$ soit proche de l'inverse de la cadence courante $r_k$ si l'événement ev(p, t) appartient à l'objet k. La prise en compte de la contrainte temporelle à l'étape 44 consiste alors, après avoir calculé le score $C_k$ selon (14), à choisir parmi les différents objets cas auxquels l'événement ev(p, t) est attribuable, celui pour lequel le score est le plus proche de 1. Une fois que ce choix a été fait, on peut mettre à jour la cadence $r_k$ pour l'objet choisi et passer à l'étape 45 de la figure 11.

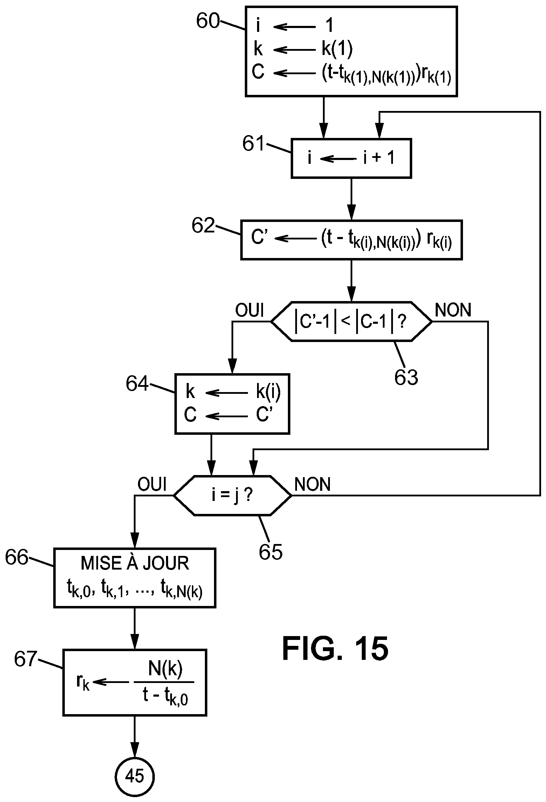

Ce traitement prenant en compte des contraintes temporelles pour la levée d'ambiguïtés, et constituant un mode d'exécution de l'étape 56 de la figure 14, est illustré par la figure 15. Il commence à l'étape 60 par une initialisation d'un index i à 1, l'index d'objet k étant initialisé à k(1) et le score C à $(t - t_{k(1),N(k(1))})r_{k(1)}$. Une boucle 61-65 est exécutée pour évaluer les scores $C_{k(i)}$ des différents objets auxquels l'événement ev(p, t) est attribuable. À l'étape 61, l'index i est incrémenté d'une unité. À l'étape 62, le score $C_{k(i)}$ de l'objet k(i) est calculé selon $C' = (t - t_{k(i),N(k(i))})r_{k(i)}$. Si $|C' - 1| \geq |C - 1|$ (test 63), le test de sortie de boucle 65 est exécuté pour comparer l'index i au nombre j d'objets candidats. Si $|C' - 1| < |C - 1|$ au test 63, l'étape 64 est exécutée pour remplacer l'index k par k(i) et mettre à jour C = C' avant de passer au test de sortie de boucle 65. Tant que i < j au test 65, le processus revient à l'étape 61 pour l'itération suivante. Quand i = j, l'attribution de l'événement à l'objet k a été complétée et l'algorithme passe à l'étape 66 de mise à jour du nombre N(k) et des étiquettes temporelles $t_{k,0}, t_{k,1}, ..., t_{k,N(k)}$ pour l'objet k qui a été sélectionné. Ensuite, la cadence $r_k$ est mise à jour selon (12) à l'étape 67 et l'algorithme passe à l'étape 45 de la figure 11.

Une autre manière de lever l'ambiguïté à l'étape 56 est de combiner des contraintes spatiales et temporelles en faisant référence aux plans de déplacement $\Pi_{k(1)}$, ..., $\Pi_{k(j)}$ des différents des objets k(1), ..., k(j) attribuables à l'événement ev(p, t).

En particulier, on peut retenir pour l'attribution de l'événement ev(p, t) l'objet k qui, parmi k(1), ..., k(j), minimise la distance, mesurée dans la représentation espace-temps à trois dimensions, entre l'événement ev(p, t) et chaque plan $\Pi_{k(1)}$, ..., $\Pi_{k(j)}$. L'événement est alors attribué à l'objet k tel que :

$$k = \underset{i=1,2,\dots,j}{Arg \min} D(i) \qquad (15)$$

avec :

$$D(i) = |eg_{k(i)}.\, n_{k(i)}| \qquad (16)$$

où « . » désigne le produit scalaire entre deux vecteurs dans l'espace à trois dimensions, $n_{k(i)}$ est le vecteur donnant la direction de la normale au plan $\Pi_{k(i)}$ et $eg_{k(i)}$ est le vecteur allant du point e marquant l'événement détecté ev(p, t) dans l'espace à trois dimensions à l'un des points $g_{k(i)}$ du plan $\Pi_{k(i)}$.

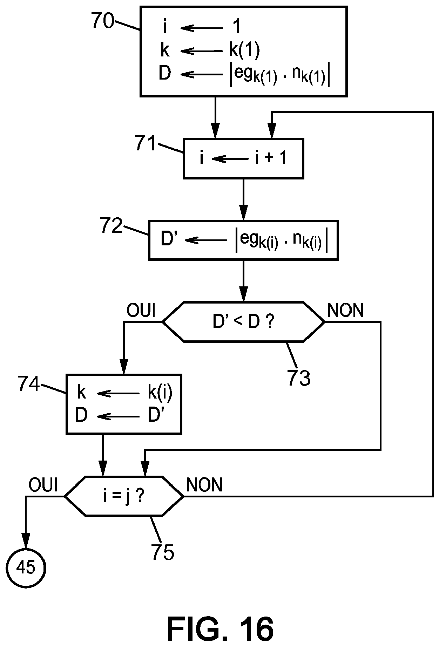

Ce traitement combinant des contraintes spatiales et temporelles pour la levée d'ambiguïtés, et constituant un autre mode d'exécution de l'étape 56 de la figure 14, est illustré par la figure 16. Il commence à l'étape 70 par une initialisation d'un index i à 1, l'index d'objet k étant initialisé à k(1) et la distance D à $|eg_{k(1)}.\, n_{k(1)}|$. Une boucle 71-75 est exécutée pour évaluer les distances D(i) pour les différents objets auxquels l'événement ev(p, t) est attribuable. À l'étape 71, l'index i est incrémenté d'une unité. À l'étape 72, la distance D(i) pour l'objet k(i) est calculée selon D = $|eg_{k(i)}.\, n_{k(i)}|$. Si D' ≥ D (test 73), le test de sortie de boucle 75 est exécuté pour comparer l'index i au nombre j d'objets candidats. Si D' < D au test 73, l'étape 74 est exécutée pour remplacer l'index k par k(i) et mettre à jour D = D' avant de passer au test 75. Tant que i < j au test 75, le processus revient à l'étape 71 pour l'itération suivante. Quand i = j, l'attribution de l'événement à l'objet k a été complétée et l'algorithme passe à l'étape 45 de la figure 11.

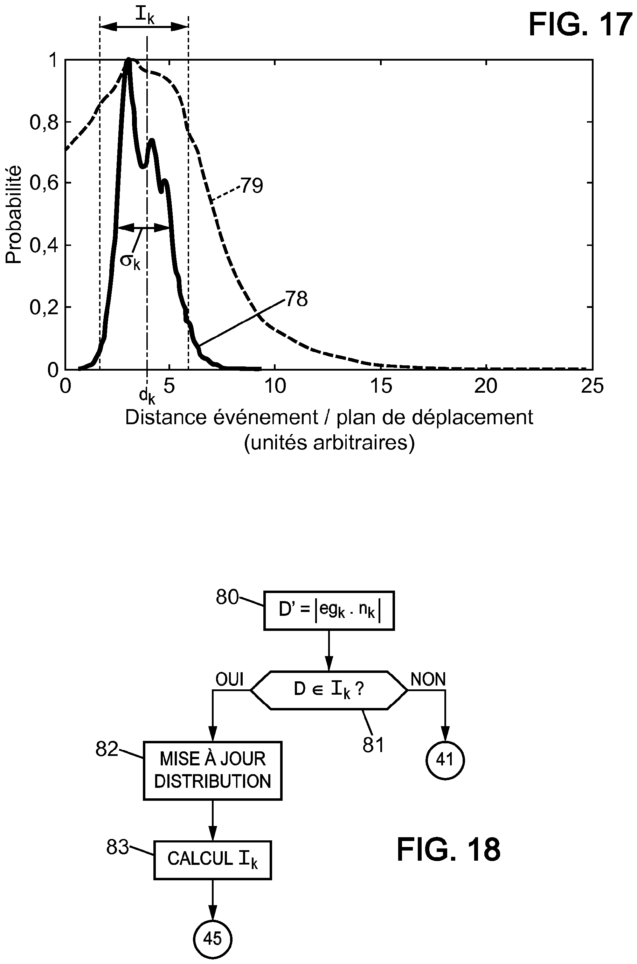

Lorsque le capteur asynchrone 10 est en mouvement, des événements sont également générés par le fond fixe de la scène. La figure 17 montre la distribution de distances typique entre les événements appartenant à un objet poursuivi k et le plan de déplacement $\Pi_k$ estimé pour cet objet (courbe 78), ainsi que la distribution de distance typique entre les événements appartenant au fond fixe et le plan de déplacement de l'objet (courbe 79). Ceci montre que le plan de déplacement moyen $\Pi_k$ peut fournir un critère discriminant pour séparer les événements concernant un objet poursuivi k de ceux concernant des objets non poursuivis y compris le fond. Les événements qui ne sont pas en cohérence avec l'objet poursuivi ou, de manière équivalente, « trop loin » du plan de déplacement $\Pi_k$ sont simplement ignorés.

Une manière de filtrer les événements issus du fond de la scène consiste alors à estimer la distribution statistique des distances entre le plan de déplacement $\Pi_k$ de l'objet poursuivi (estimé à l'étape 47 de la figure 11) et les points marquant les événements détectés ev(p, t) qui ont été attribués à cet objet à l'étape 44 au cours d'une fenêtre temporelle Δt. Cette distribution statistique correspond à la courbe 78 de la figure 17. Elle permet d'évaluer la distance moyenne $d_k$ entre le plan de déplacement $\Pi_k$ et les événements attribués à l'objet ainsi que l'écart-type $\sigma_k$ de la distribution. À partir de ces paramètres, on détermine un intervalle $I_k$ de valeurs admissibles de la distance. Lorsqu'il faut décider si un nouvel événement détecté ev(p, t) doit être affecté à l'objet poursuivi, on calcule selon (16) la distance D = $|eg_k.n_k|$ entre le point marquant l'événement ev(p, t) dans l'espace à trois dimensions et le plan $\Pi_k$. Si cette distance D tombe en dehors de l'intervalle $I_k$, l'événement n'est pas attribué à l'objet k. Dans le cas contraire, l'événement est attribué à l'objet k, ou soumis à d'autres filtrages, notamment pour prendre en compte d'éventuelles occlusions comme discuté précédemment en référence aux figures 14-16.

Par exemple, l'intervalle $I_k$ est centré sur la valeur de distance moyenne $d_k$, et sa largeur est un multiple de l'écart-type $\sigma_k$.

Pour prendre en compte le mouvement éventuel du fond, l'étape 44 de la figure 11 peut comporter le traitement illustré la figure 18 (dans le cas particulier ou un seul objet k est poursuivi ; ce cas être aisément généralisable à celui où K > 1). Après détection de l'événement ev(p, t) à l'étape 42, la distance D = $|eg_k.n_k|$ est calculée à l'étape 80 puis le test 81 est exécuté pour déterminer si cette distance D tombe dans l'intervalle $I_k$. Si D est en dehors de $I_k$, le processus revient à l'étape 41 de la figure 11. Si D tombe dans $I_k$, l'événement ev(p, t) est attribué à l'objet k plutôt qu'au mouvement du fond. La distribution des distances relativement au plan de déplacement $\Pi_k$ de l'objet k (courbe 78) est alors mise à jour avec la distance D à l'étape 82, puis l'intervalle $I_k$ est recalculé à l'étape 83. Le processus passe alors l'étape 45 de la figure 11.

Les traitements décrits en référence aux figures 14-18 ont été présentés dans le contexte d'une réalisation de l'invention suivant la figure 11. Cependant, on observera que ces traitements, servant à prendre en compte les éventuelles occlusions entre objets multiples poursuivis ainsi que le mouvement éventuel du fond de la scène, sont également utilisables avec d'autres modes d'exécution du procédé de poursuite de forme, notamment lorsqu'on a recours à une technique de type SVD comme décrit en référence à la figure 8 qui ne représente pas un mode de réalisation de l'invention.

Des expériences numériques ont été conduites pour mettre en évidence les performances du procédé exposé ci-dessus. Ces expériences sont rapportées dans les exemples qui suivent.

Exemple 1

L'expérience a été réalisée dans le cas d'une étoile dessinée sur un disque tournant, comme indiqué précédemment en référence aux figures 6A et 7, en recherchant une transformation spatiale rigide $F_t$, c'est-à-dire composée d'une translation et d'une rotation dans le plan des images.

Le disque tournait à une vitesse de 670 tours par minute. Le motif H donnant la forme du modèle G a été généré manuellement en sélectionnant 6 points par côté de l'étoile à partir d'un cliché. Un seuil de distance de 6 pixels a été utilisé pour éliminer l'impact du bruit et réduire la charge de calcul. Comme illustré par la figure 7, l'algorithme réussit à poursuivre la forme tournante de manière efficace malgré la vitesse de rotation élevée.

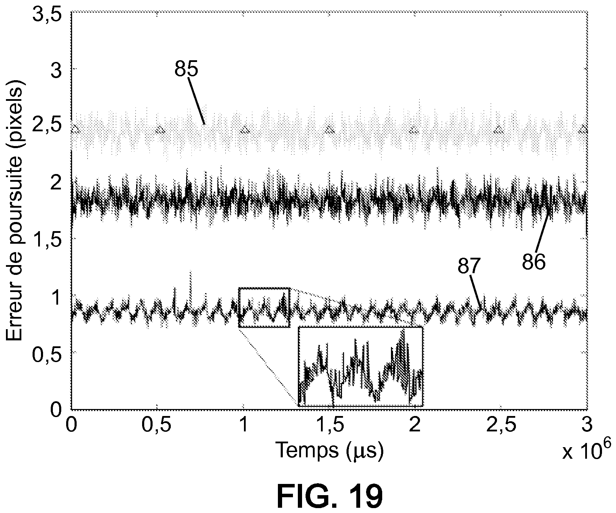

La figure 19 permet de comparer la précision de la poursuite de la forme en étoile obtenue avec trois méthodes de poursuite :

- algorithme ICP traitant les images d'une caméra classique dont le signal de sortie se compose de trames (courbe 85 sur la figure 19). Pour que la comparaison soit juste, seuls les emplacements de pixels restant après différenciation des trames sont considérés par l'algorithme ICP ;

- méthode de poursuite de forme utilisant le capteur asynchrone basé sur événement 10 avec estimation en forme analytique reposant sur une approche SVD, de la manière indiquée en référence à la figure 8 (courbe 86), en considérant des événements collectés sur une période de temps de 50 μs ;

- méthode de poursuite de forme utilisant le capteur asynchrone basé sur événement 10 avec estimation du modèle mis à jour en fonction de l'association courante entre un pixel p de la matrice d'où provient un événement ev(p, t) et un point m du modèle, indépendamment des associations effectuées avant la détection de cet événement, de la manière indiquée en référence à la figure 11 (courbe 87).

Pour évaluer la précision de la poursuite de formes, la distance moyenne entre l'ensemble modèle et les emplacements des événements actifs est calculée toutes les 200 μs. Les erreurs moyennes sont respectivement de 2,43, 1,83 et 0,86 pixels pour les courbes 85, 86 et 87, avec des écarts-type respectifs de 0,11, 0,19 et 0,20 pixels. La prise en compte du signal asynchrone du capteur permet une amélioration notable de la méthode de poursuite de formes, spécialement dans le cas de la figure 11.

La précision temporelle supérieure conduit à une poursuite plus précise. La courbe d'erreur présente des oscillations (encadré de la figure 19) dues à la rotation répétitive du stimulus. L'erreur de poursuite démontre les bonnes propriétés de reproductibilité et fiabilité de l'algorithme. L'erreur résiduelle est due à la géométrie de la matrice carrée des pixels combinée à la résolution spatiale limitée du capteur, qui ne fournit pas une réponse isotrope par rapport à la position angulaire de la forme.

Le nombre de points retenus pour le modèle G a une influence sur le coût et la précision des calculs.

Dans le cas d'une réalisation selon la figure 11, on peut définir une cadence d'images équivalente comme l'inverse du temps de calcul nécessaire pour traiter un événement.

Dans l'exemple, le programme de poursuite était exécuté sur un ordinateur équipé d'une unité de traitement centrale (CPU) de type « Intel Core i5 » cadencée à 2,8 GHz et occupait 25 % de la capacité de ce CPU. Dans cette configuration, il est apparu qu'une taille de 90 points dans le modèle peut fournir une fréquence de détection correspondant à une cadence d'images équivalente de 200 kHz. Jusqu'à environ 2000 points dans le modèle, celui-ci peut être mis à jour avec une cadence d'images équivalente d'au moins 11 kHz. L'expérience a montré que pour un modèle de 60 à 70 points, l'algorithme est capable de poursuivre en temps réel une forme se déplaçant à une vitesse allant jusqu'à 1250 tr/m.

De façon générale, il y a intérêt à inclure les coins du contour de l'objet dans le modèle. Le long d'un bord rectiligne de la forme de l'objet, on peut cependant réduire le nombre de points sans influencer négativement la précision finale de la poursuite.

Quand le nombre de points augmente, l'erreur de poursuite ne tend pas vers zéro, mais vers une valeur d'environ 0,84 pixels, liée à la limite de résolution spatiale du capteur asynchrone. De façon logique, plus le modèle contient de points, meilleure est la précision de la poursuite, mais avec un coût de calcul plus élevé. Une taille de 60 à 100 points pour le modèle est un bon compromis pour obtenir une précision raisonnable (autour de 0,90 pixels) en préservant une fréquence de poursuite élevée (autour de 200 kHz).

Exemple 2

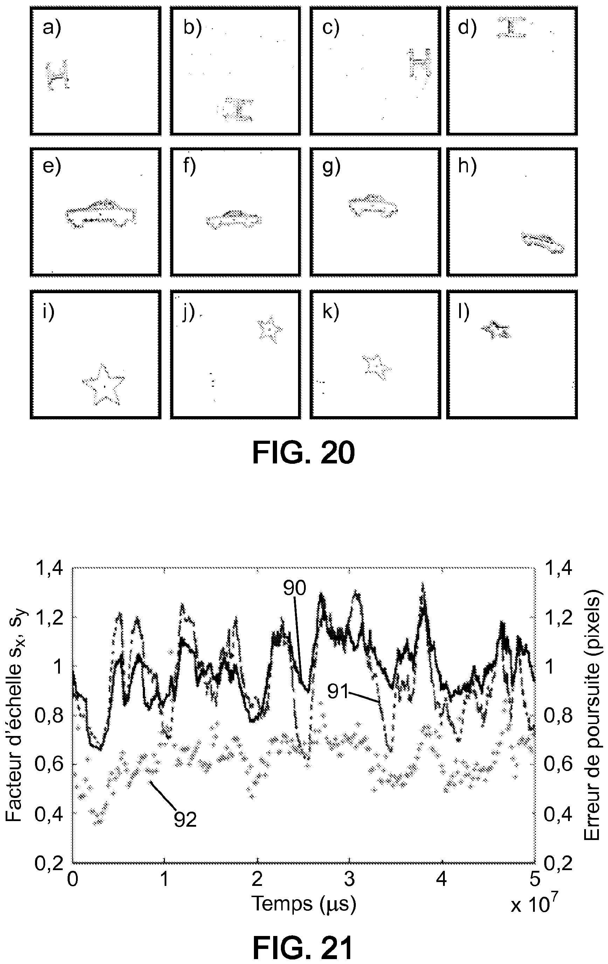

L'expérience a été réalisée dans le cas de plusieurs formes (une forme en H, une forme de voiture et une forme en étoile) en prenant en compte une transformation spatiale affine calculée à l'aide des expressions (6), (7), (11) et (12) dans une réalisation selon la figure 11. Au cours de cette expérience, les formes des objets se sont déformées et redimensionnées de la manière montrée sur la figure 20 (a-d pour la forme en H, e-h pour la forme de voiture, i-l pour la forme en étoile).

La figure 21 montre les facteurs d'échelle $s_x$, $s_y$ par rapport à la taille d'origine de la forme, au cours de la poursuite de la forme de voiture (courbes 90 et 91, respectivement). Les rapports d'échelle sont différents le long des deux axes parce que les changements de perspective ont eu lieu plus souvent le long de l'axe vertical que le long de l'axe horizontal au cours de l'expérience. L'erreur de poursuite (tracé 92) a montré une valeur moyenne de 0,64 pixels et un écart-type de 0,48 pixels.

Le procédé décrit ci-dessus en référence à la figure 11 fournit donc de bonnes performances lors de la recherche d'une transformation affine.

Exemple 3

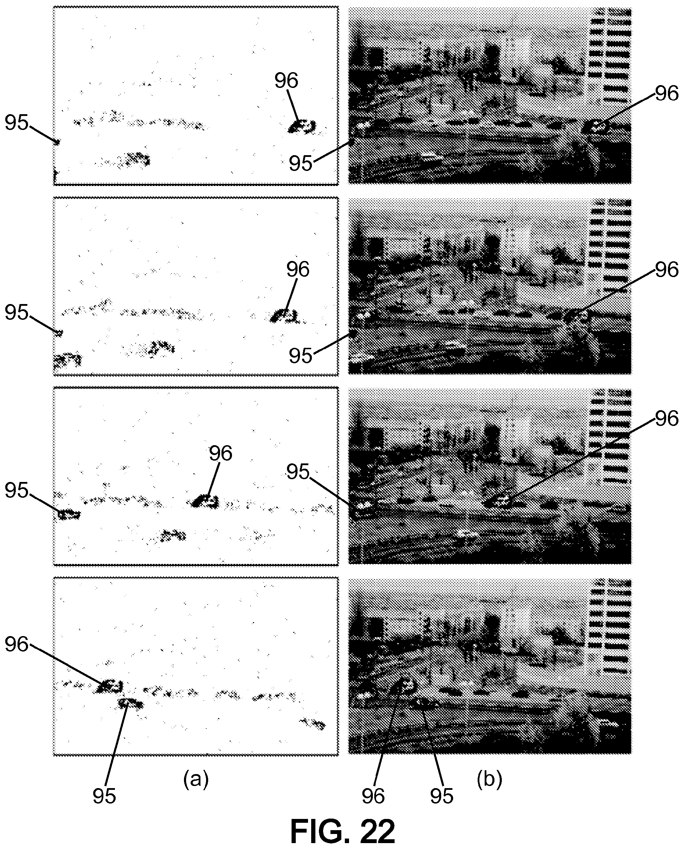

Dans cette expérience, des données de trafic automobile ont été acquises avec le capteur asynchrone. Comme le montre la figure 22 à quatre instants successifs, plusieurs véhicules se déplaçaient simultanément sur plusieurs files. La colonne (a) de la figure 22 montre les événements générés par le capteur asynchrone et accumulées pendant quelques microsecondes, tandis que la colonne (b) montre des images à niveaux de gris correspondantes. On voit que la scène choisie présentait des instants critiques avec de fortes occlusions dues à des objets statiques (arbres, lampadaires, ...) et à des objets mobiles (véhicules) qui constituaient un défi significatif pour la poursuite robuste.

Deux formes 95, 96 correspondant respectivement à une voiture et à une camionnette ont été poursuivies au moyen du procédé illustré par la figure 11, en recherchant des transformations affines $F_t$. Les pas de convergence $\eta_1$, $\eta_2$ et $\eta_3$ des expressions (6), (7), (11) et (12) ont respectivement été fixés 0,1, à 0,002 et à $10^{-5}$. Le modèle $G_1$ pour la voiture comportait 67 points, tandis que le modèle $G_2$ pour la camionnette comportait 102 points. Ces modèles ont été générés en pointant manuellement des pixels d'une image acquise.

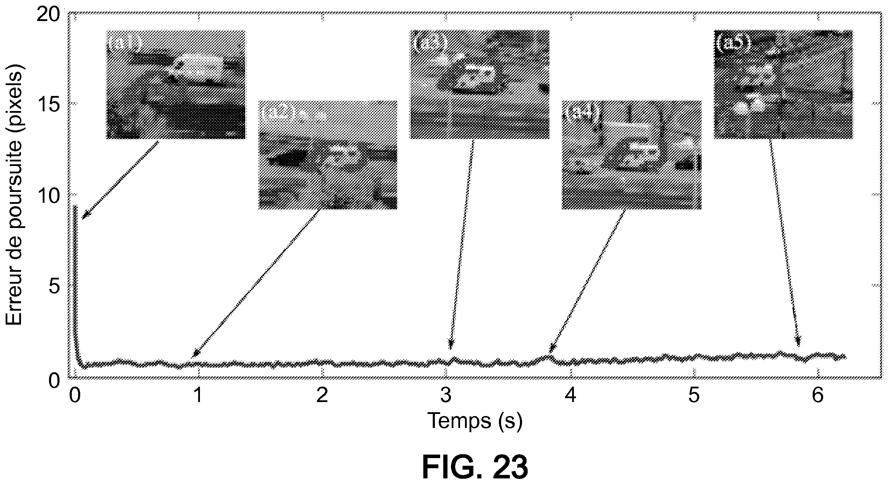

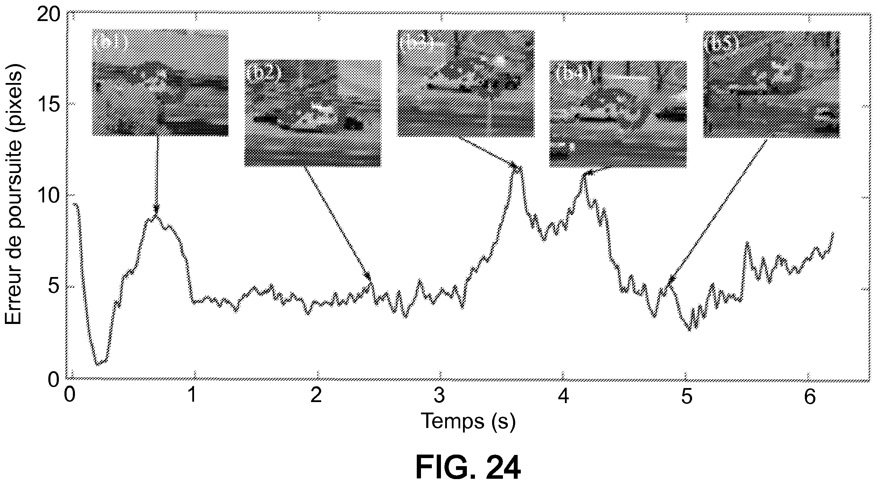

La figure 23 montre les erreurs de poursuite constatées avec un procédé conforme à la figure 11 et un capteur asynchrone basé sur événement, tandis que la figure 24 montre les mêmes erreurs constatées avec un procédé classique utilisant les images issues d'une caméra à base de trames. Pour que la comparaison soit pertinente, la technique ICP classique à base de trames a été appliquée à des images à niveaux de gris reconstruites à une fréquence de 100 trames par seconde. Chaque image était prétraitée de façon à obtenir des bords mobiles en calculant une différence entre les trames successives et en appliquant une opération de seuillage. La précision temporelle de la méthode basée sur événement était de l'ordre de 1 μs.

L'erreur de poursuite moyenne était de 0,86 pixels avec un écart-type de 0,19 pixels pour la méthode basée sur événement selon la figure 11 (figure 23), tandis que la méthode classique à base de trames donnait lieu à une erreur de poursuite moyenne de 5,70 pixels avec un écart-type de 2,11 pixels (figure 24). Les vignettes (a1)-(a5) sur la figure 23 et (b1)-(b5) sur la figure 24 montrent des situations ou l'objet « camionnette » rencontre des occlusions, donnant lieu à des maxima de l'erreur de poursuite.

Il est remarquable que la précision temporelle supérieure procurée par le procédé selon l'invention s'accompagne d'une meilleure stabilité de poursuite que la méthode classique à base de trames. Dans la méthode classique, la solution (coûteuse) consistant à augmenter la fréquence d'acquisition ne suffit pas toujours à traiter correctement les situations d'occlusion. À l'inverse, le contenu dynamique du signal basé sur événement produit par le capteur asynchrone procure des données d'entrée plus stables pour l'algorithme. Les obstacles statiques n'engendrent pas d'événements et n'ont donc quasiment pas d'impact sur le processus de poursuite.

Exemple 4

Plusieurs stratégies de levée d'ambiguïté ont été testées pour la poursuite d'objets multiples susceptibles de présenter des occlusions.

Les formes d'un objet « voiture » et d'un objet « camionnette » se déplaçant dans le même sens mais avec des vitesses différentes ont été poursuivies simultanément dans une scène réelle comportant du trafic automobile. Pendant un temps, les formes de la camionnette et de la voiture se superposent dans le champ de vision du capteur 10, jusqu'à ce que la camionnette dépasse la voiture. Les objets autres que la camionnette et la voiture sont traités comme du bruit de fond.

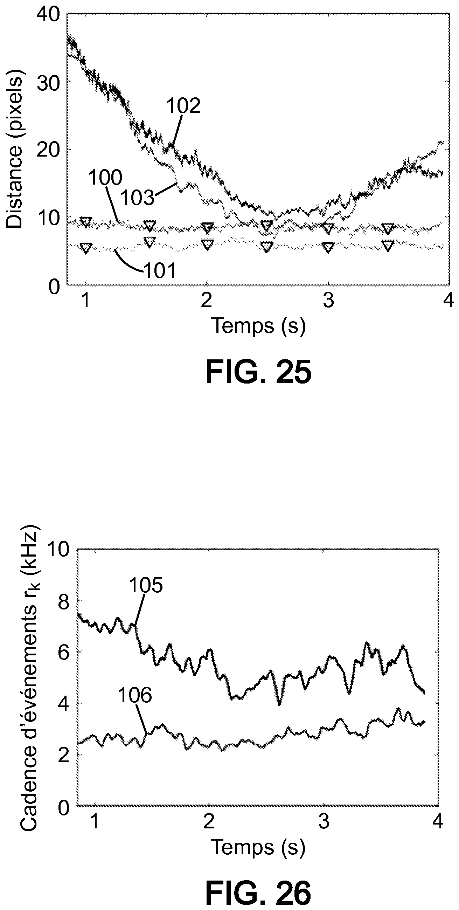

La figure 25 montre :

- les distances observées entre un événement provenant de l'objet « camionnette » et le centre de gravité de l'objet « camionnette » (courbe 100) ;

- les distances observées entre un événement provenant de l'objet « voiture » et le centre de gravité de l'objet « voiture » (courbe 101) ;

- les distances observées entre un événement provenant de l'objet « camionnette » et le centre de gravité de l'objet « voiture » (courbe 102) ; et

- les distances observées entre un événement provenant de l'objet « camionnette » et le centre de gravité de l'objet « voiture » (courbe 103).

Des ambiguïtés se produisent lorsque ces courbes passent par des valeurs similaires, signifiant que les formes des deux véhicules se chevauchent dans le champ de vision (entre environ 2,2 et 2,9 s). Dans ce cas, l'utilisation d'informations spatiales peut être insuffisante, à moins que la taille de la région commune soit très petite.

La figure 26 montre les cadences d'événements moyennes $r_k$ de l'objet « camionnette » (courbe 105) et de l'objet « voiture » (courbe 106). Dans cette expérience, on voit que les deux courbes sont disjointes, de sorte que les formes des deux véhicules restent séparables pendant toute la séquence en faisant référence à des cadences d'événements de l'ordre de 3000 événements par seconde pour la voiture et de l'ordre de 5000 événements par seconde pour la camionnette. Cependant, cette propriété de séparabilité n'est pas nécessairement garantie pour une séquence quelconque.

Dans le cas général, il est typiquement préférable de combiner la contrainte temporelle avec des contraintes additionnelles, comme par exemple des contraintes spatiales.

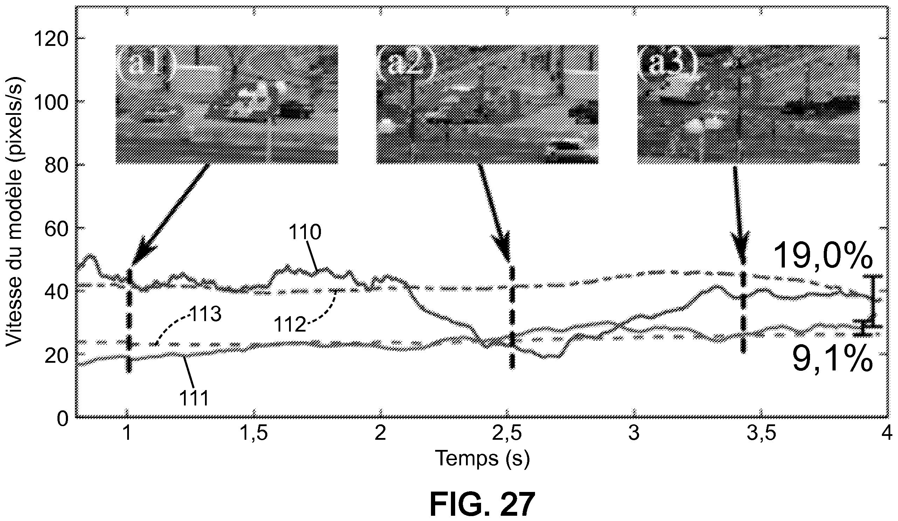

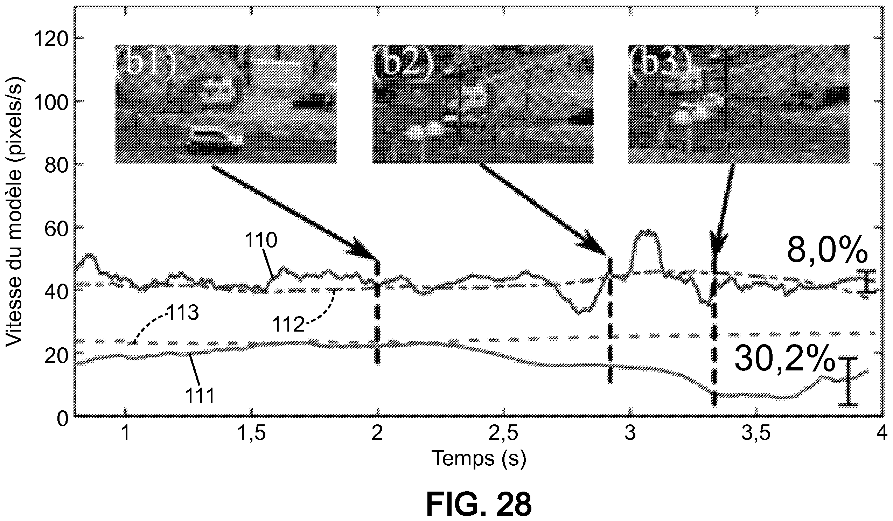

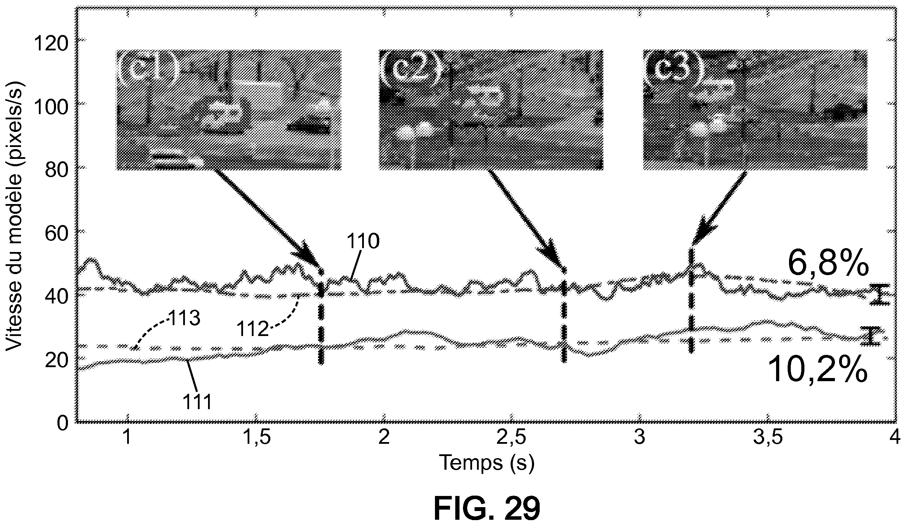

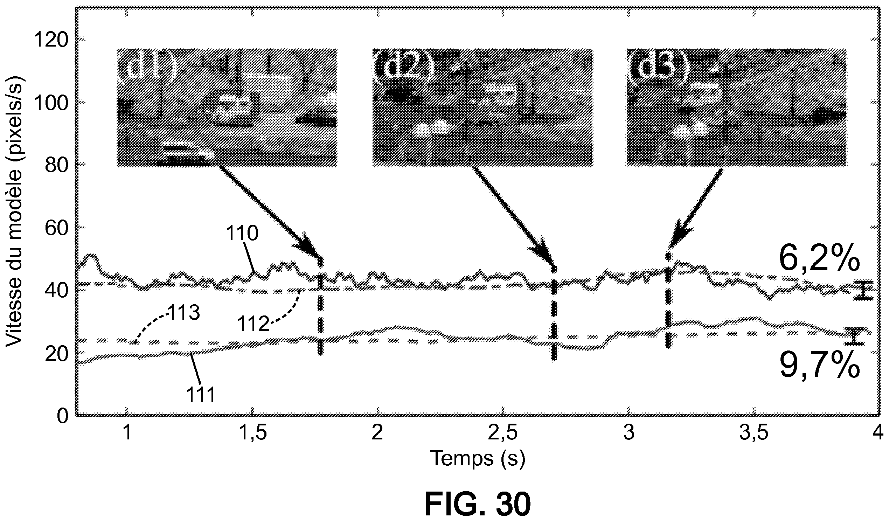

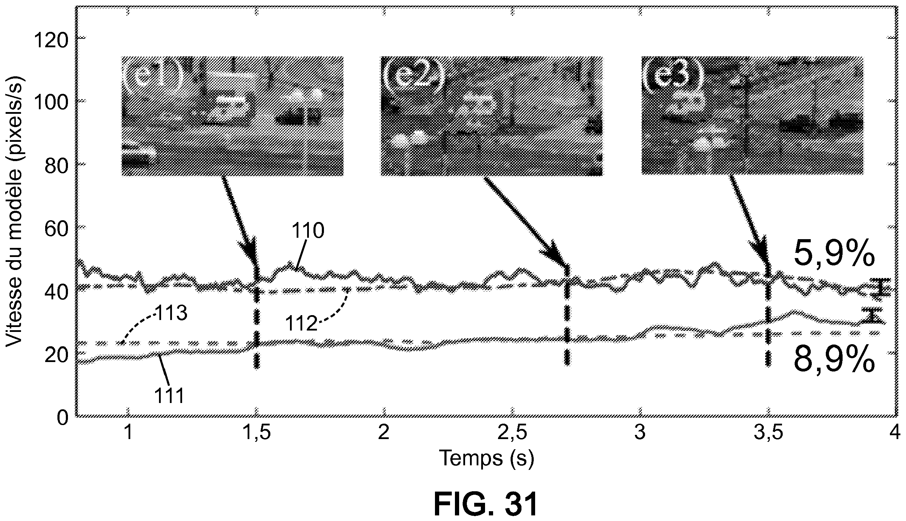

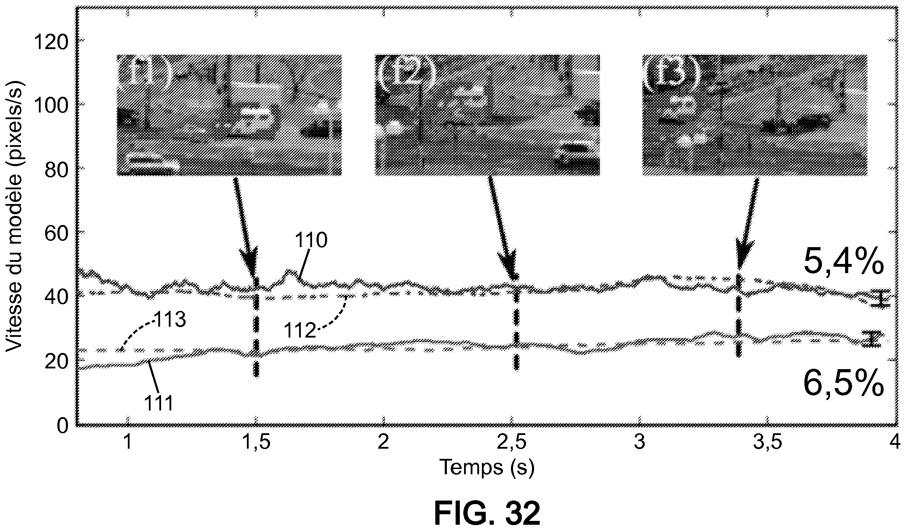

Les figures 27-32 montrent les vitesses des modèles de l'objet « camionnette » (courbe 110) et de l'objet « voiture » (courbe 111) estimées lors de la mise en oeuvre d'une méthode selon la figure 11, en les comparant aux vitesses réelles (courbes en pointillés 112 et 113, respectivement) déterminées manuellement en identifiant les points correspondants sur des images successives. Les vitesses moyennes étaient respectivement de 42,0 pixels/0 pour la camionnette est de 24,3 pixels/s pour la voiture. Les six figures correspondent à six stratégies différentes pour la levée d'ambiguïté : *« Attribuer au plus proche »* (figure 27) ; *« Rejeter tous »* (figure 28) ; *« Mettre à jour tous »* (figure 29) ; *« Mise à jour pondérée »* (figure 30) ; *« Contrainte temporelle basée sur la cadence $r_k$ »* (figure 31) ; et *« Combinaison de contraintes spatiale et temporelle utilisant le plan de déplacement $\Pi_k$ »* (figure 32). Les vignettes incluses dans les figures 27-32 présentent les instants les plus intéressants pour étudier les différences entre les méthodes. Le début de chaque courbe est le même tant qu'aucune occlusion ne s'est produite. Les pourcentages indiqués dans les parties droites des graphiques correspondent à l'écart relatif moyen entre les courbes 110 et 112 d'une part et entre les courbes 111 et 113 d'autre part.

On voit sur la figure 27 que la stratégie *« Attribuer au plus proche »* fournit des résultats assez médiocres puisque le modèle de la camionnette et perdu suite à son occlusion par le modèle de la voiture. La stratégie *« Rejeter tous »* (figure 28) n'est pas plus satisfaisante puisque, cette fois, c'est le modèle de la voiture qui est perdu après l'occlusion.

La stratégie *« Mettre à jour tous »* (figure 29) paraît préférable puisque les formes des 2 véhicules restent poursuivies, sans perte. À la fin de la séquence, les événements générés par la camionnette attirent le modèle de la voiture, de sorte que la trajectoire résultant pour la voiture dévie légèrement vers celle de la camionnette et que la vitesse estimée de la camionnette diminue lorsque celle de la voiture augmente (voir (c3) sur la figure 29).

La stratégie *« Mise à jour pondérée »* répartit la dynamique introduite par les événements ambigus entre les différents objets avec des pondérations dépendant des distances. La figure 30 montre que la camionnette et la voiture sont poursuivies sans perte et que les courbes de vitesse correspondent mieux aux vitesses réelles. Il demeure des différences à la fin de la séquence, pour la même raison que dans la stratégie *« Mettre à jour tous »,* mais avec une moindre amplitude de ces erreurs. Cette stratégie « Mise à jour pondérée » préférée parmi celles reposant sur des contraintes spatiales lorsque des objets multiples se croisent ou se heurtent.

La stratégie *« Contrainte temporelle basée sur la cadence $r_k$ »* (figure 31) donne de bons résultats dans le cadre de cette expérience. Toutefois, sa fiabilité n'est pas assurée lorsque les objets-cibles ont des cadences d'événements similaires.

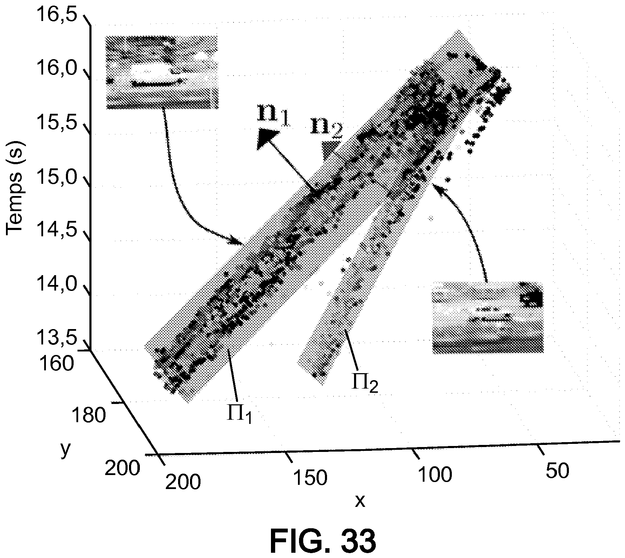

La stratégie *« Combinaison de contraintes spatiale et temporelle utilisant le plan de déplacement $\Pi_k$ »* a été utilisée avec une période $\Delta t$ de 3 s pour l'estimation des plans de déplacement $\Pi_1$ de l'objet « camionnette » et $\Pi_2$ de l'objet « voiture » (figure 33). Comme le montre la figure 32, cette stratégie est celle qui donne lieu à l'erreur la plus faible dans la poursuite des deux véhicules. Ceci s'explique par le fait que les plans spatio-temporels locaux $\Pi_1$, $\Pi_2$ contraignent fortement le voisinage en éliminant des mauvaises attributions et en procurant une meilleure robustesse au bruit. Il est intéressant de remarquer que les erreurs sont réparties de façon plus uniforme entre la camionnette et la voiture grâce au processus d'attribution plus fiable.

Exemple 5

Deux séquences de signal asynchrone générées par un capteur mobile ont été testées en appliquant la méthode d'élimination des événements engendrés par le fond qui a été décrite en référence à la figure 16.

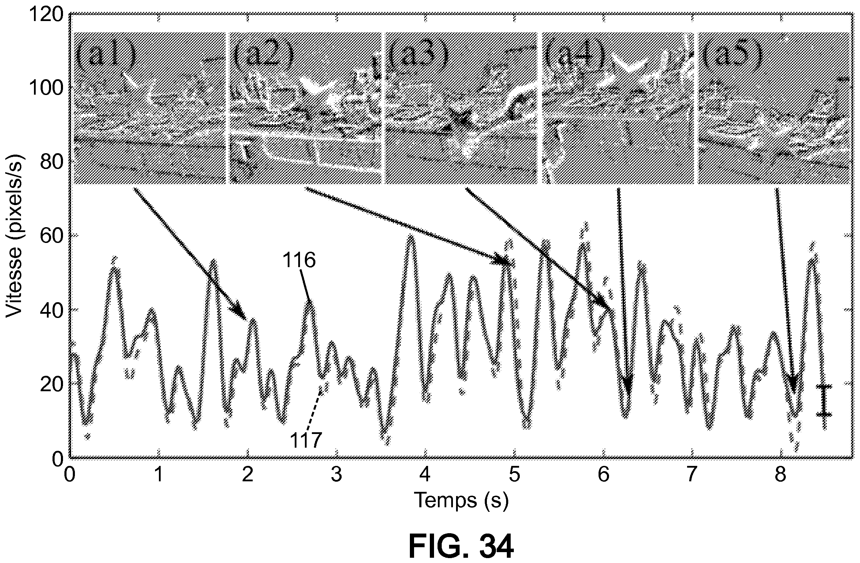

Dans la première séquence, une forme en étoile était déplacée dans un environnement intérieur tandis que le capteur asynchrone était tenu à la main et remué simultanément. La figure 34 montre plusieurs clichés de la scène (a1)-(a5).

Pour évaluer les résultats, la vitesse de l'étoile calculée par le procédé selon la figure 11 (combinant le mouvement de l'étoile et celui du capteur) est montrée par la courbe 116 sur la figure 34, et comparée à la vitesse réelle pointée manuellement et indiquée par la courbe en pointillés 117. L'erreur moyenne entre les données estimées et les données réelles est estimée à 6 %. Bien que la scène comporte de nombreuses arêtes dans le fond, le processus de poursuite reste robuste.

La seconde séquence provient d'une scène extérieure avec de nouveau du trafic automobile. Une forme de voiture est poursuivie à l'aide d'un capteur de vision asynchrone 10 déplacé manuellement.

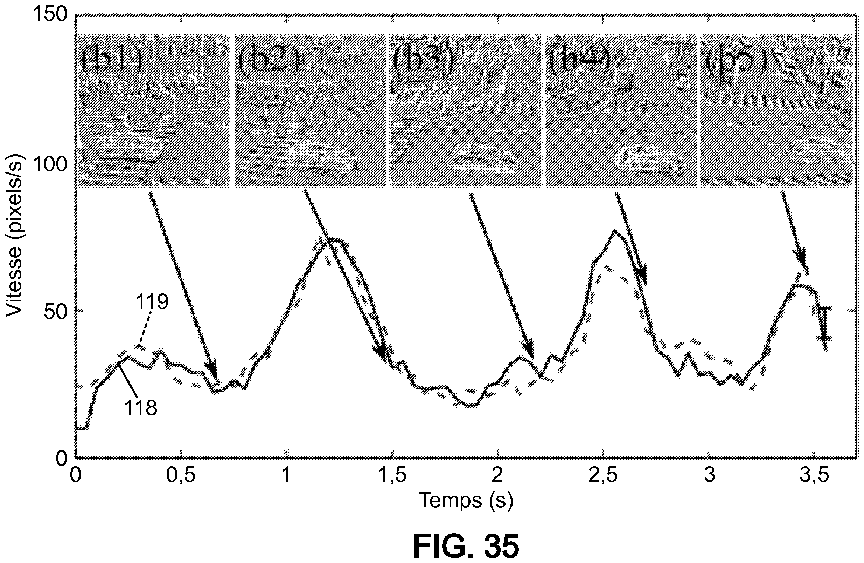

La figure 35 montre les résultats des estimations de la vitesse de la voiture (courbe 118) et les compare aux vitesses réelles déterminées manuellement (courbe 119). Malgré des situations difficiles à traiter (par exemple lorsque des trottoirs ou des passages piétons sont proches de la voiture ou en superposition), les bonnes propriétés spatio-temporelles de l'algorithme fournissent des résultats acceptables. L'erreur d'estimation moyenne sur la vitesse est de 15 %. La qualité de la poursuite se dégrade à partir d'environ 3,5 secondes (b5 sur la figure 35), lorsque la voiture commence à subir des changements de perspective importants.

Globalement, la poursuite basée sur événement telle qu'exposée ci-dessus est robuste même lorsque le capteur et les objets poursuivis sont en mouvement.

Les modes de réalisation décrits ci-dessus sont des illustrations de la présente invention. Diverses modifications peuvent leur être apportées sans sortir du cadre de l'invention qui ressort des revendications annexées.

**Revendications**

1. Procédé de suivi de forme dans une scène, comprenant :

   - recevoir de l'information asynchrone d'un capteur de lumière (10) ayant une matrice de pixels disposée en regard de la scène, l'information asynchrone comprenant, pour chaque pixel de la matrice, des événements successifs provenant de manière asynchrone dudit pixel ; et
   - mettre à jour un modèle (G) comportant un ensemble de points et représentant la forme poursuivie d'un objet, après détection d'événements attribués audit objet dans l'information asynchrone, la mise à jour comprenant, suite à la détection d'un événement (ev(p, t)) :

      • associer à l'événement détecté un point (m) du modèle présentant une distance minimale par rapport au pixel (p) de la matrice d'où provient l'événement détecté ; et
      • déterminer le modèle mis à jour en fonction du pixel (p) de la matrice d'où provient l'événement détecté et du point (m) associé et indépendamment des associations effectuées avant la détection dudit événement (ev(p, t)).

2. Procédé selon la revendication 1, dans lequel lorsqu'aucun point du modèle (G) n'est situé à une distance inférieure à un seuil ($d_{max}$, $d_{th}$) par rapport au pixel (p) d'où provient un événement détecté (ev(p, t)), le modèle n'est pas mis à jour suite à la détection dudit événement qui n'est pas attribué à l'objet.

3. Procédé selon l'une quelconque des revendications précédentes, comprenant en outre:

   - estimer un plan de déplacement de l'objet, le plan de déplacement ($\Pi_k$) étant estimé dans un espace à trois dimensions, à savoir deux dimensions spatiales correspondant à deux directions de la matrice de pixels et une dimension temporelle, par minimisation d'un critère de distance par rapport à un ensemble de points marquant des événements détectés qui ont été attribués à l'objet au cours d'une fenêtre temporelle se terminant à un instant courant ; et
   - suite à la détection d'un événement (ev(p, t)), tenir compte du plan de déplacement estimé de l'objet pour décider d'attribuer ou non ledit événement à l'objet.

4.  Procédé selon la revendication 3, dans lequel plusieurs objets ont des formes respectives poursuivies dans la scène, chacun des objets ayant un modèle respectif ($G_k$) mis à jour après détection d'événements qui lui sont attribués et un plan de déplacement estimé ($\Pi_k$), le procédé comprenant en outre, suite à la détection d'un événement (ev(p, t)) attribuable à au moins deux des objets :

    - calculer des distances respectives, dans l'espace à trois dimensions, entre un point marquant ledit événement détecté et les plans de déplacement respectivement estimés pour lesdits objets ; et
    - attribuer ledit événement détecté à l'objet pour lequel la distance calculée est minimale.

5.  Procédé selon la revendication 3 ou la revendication 4, comprenant en outre:

    - estimer une distribution statistique de distances entre le plan de déplacement ($\Pi_k$) de l'objet et des points marquant des événements détectés qui ont été attribués à l'objet; et
    - suite à la détection d'un événement (ev(p, t)), tenir compte du plan de déplacement estimé de l'objet et de la distribution statistique estimée pour décider d'attribuer ou non ledit événement à l'objet.

6.  Procédé selon la revendication 5, comprenant en outre:

    - déterminer un intervalle ($I_k$) de valeurs admissibles de distance d'après la distribution statistique estimée; et
    - ne pas attribuer un événement détecté à l'objet si le point marquant ledit événement détecté dans l'espace à trois dimensions présente, par rapport au plan de déplacement estimé, une distance tombant en dehors de l'intervalle de valeurs admissibles de distance.

7.  Procédé selon l'une quelconque des revendications précédentes, dans lequel plusieurs objets ont des formes respectives poursuivies dans la scène, chacun des objets ayant un modèle respectif ($G_k$) mis à jour après détection d'événements qui lui sont attribués, le procédé comprenant en outre, suite à la détection d'un événement (ev(p, t)):

    - si un seul des objets remplit la condition d'avoir dans son modèle un point ayant une distance inférieure à un seuil ($d_{th}$) par rapport au pixel (p) de la matrice d'où provient l'événement détecté, attribuer l'événement détecté audit objet.

8.  Procédé selon l'une quelconque des revendications précédentes, dans lequel plusieurs objets ont des formes respectives poursuivies dans la scène, chacun des objets ayant un modèle respectif ($G_k$) mis à jour après détection d'événements qui lui sont attribués, le procédé comprenant en outre, suite à la détection d'un événement (ev(p, t)) attribuable à au moins deux des objets:

    - pour chaque objet auquel l'événement détecté est attribuable, associer à l'événement détecté un point (m) du modèle ($G_t$) dudit objet par minimisation d'un critère de distance respectif par rapport au pixel (p) de la matrice d'où provient l'événement détecté; et
    - attribuer l'événement détecté à l'objet pour lequel le critère de distance minimisé est le plus faible.

9.  Procédé selon l'une quelconque des revendications 1 à 7, dans lequel plusieurs objets ont des formes respectives poursuivies dans la scène, chacun des objets ayant un modèle respectif ($G_k$) mis à jour après détection d'événements qui lui sont attribués, et dans lequel, suite à la détection d'un événement (ev(p, t)) attribuable à au moins deux des objets, l'événement détecté n'est affecté à aucun des objets.

10. Procédé selon l'une quelconque des revendications 1 à 7, dans lequel plusieurs objets ont des formes respectives poursuivies dans la scène, chacun des objets ayant un modèle respectif ($G_k$) mis à jour après détection d'événements qui lui sont attribués, et dans lequel, suite à la détection d'un événement (ev(p, t)) attribuable à au moins deux des objets, l'événement détecté est affecté à chacun des objets auxquels l'événement détecté est attribuable.

11. Procédé selon la revendication 10, dans lequel la mise à jour des modèles ($G_k$) des objets auxquels l'événement détecté est attribué est effectuée avec des pondérations dépendant des critères de distance respectivement minimisés pour lesdits objets.

12. Procédé selon l'une quelconque des revendications 1 à 7, dans lequel plusieurs objets ont des formes respectives poursuivies dans la scène, chacun des objets ayant un modèle respectif ($G_k$) mis à jour après détection d'événements qui lui sont attribués, le procédé comprenant en outre:

- pour chaque objet, estimer une cadence d'événements attribués audit objet et mémoriser l'instant auquel a été détecté le dernier événement attribué audit objet; et
- suite à la détection d'un événement (ev(p, t)) attribuable à au moins deux des objets, attribuer l'événement détecté à celui des objets pour lequel le produit de la cadence d'événements estimée par l'intervalle de temps entre l'instant mémorisé et l'instant de détection dudit événement est le plus proche de 1.

13. Procédé selon l'une quelconque des revendications précédentes, dans lequel la détermination du modèle mis à jour comporte une estimation (45) d'une transformation spatiale ($F_t$) définie par un ensemble de paramètres, et une application (46) de la transformation spatiale estimée au modèle ($G_k$), et dans lequel l'estimation de la transformation spatiale comporte un calcul desdits paramètres en fonction du gradient d'une distance, dans le plan de la matrice de pixels, entre le pixel (p) de la matrice d'où provient l'événement détecté et un point obtenu en appliquant la transformation spatiale au point (m) du modèle associé à l'événement détecté.

14. Procédé selon la revendication 13, dans lequel la transformation spatiale ($F_t$) inclut une translation et une rotation dans le plan de la matrice de pixels, la translation ayant un vecteur $\Delta T$ pris égal à $-\eta_1.\nabla_T f(\Delta\theta_0, \Delta T_0)$ et la rotation ayant un angle $\Delta\theta$ pris égal à $-\eta_2.\nabla_\theta f(\Delta\theta_0, \Delta T_0)$, où $\eta_1$ et $\eta_2$ sont des pas de convergence positifs prédéfinis et $\Delta\theta_0$ et $\Delta T_0$ sont des valeurs particulières de l'angle de rotation et du vecteur de translation.

15. Procédé selon la revendication 14, dans lequel lesdites valeurs particulières de l'angle de rotation et du vecteur de translation sont respectivement $\Delta\theta_0 = \widehat{mcp}$ et $\Delta T_0 = cp - R_{\Delta\theta_0}[cm]$, où p désigne le pixel de la matrice d'où provient l'événement détecté, m désigne le point du modèle associé à l'événement détecté, c désigne le centre de la rotation, cp désigne un vecteur allant de c à p, cm désigne un vecteur allant de c à m, et $R_{\Delta\theta_0}[.]$ est la rotation de centre c et d'angle $\Delta\theta_0$.

16. Procédé selon la revendication 14 ou la revendication 15, dans lequel la transformation spatiale ($F_t$) est une transformation affine incluant en outre une application de facteurs d'échelle respectifs suivant deux axes compris dans la matrice de pixels.

17. Procédé selon la revendication 16, dans lequel les facteurs d'échelle $s_x$, $s_y$ suivant les deux axes x, y sont respectivement calculés selon $s_x = 1 + \eta_3.(|p_x| - |m_x|)$ et $s_y = 1 + \eta_3.(|p_y| - |m_y|)$, où $\eta_3$ est un pas de convergence positif prédéfini, $p_x$ et $p_y$ sont des coordonnées respectives, suivant les axes x et y, du pixel (p) de la matrice d'où provient l'événement détecté, et $m_x$ et $m_y$ sont des coordonnées respectives, suivant les axes x et y, du point (m) du modèle associé à l'événement détecté.

18. Dispositif de suivi de forme dans une scène, comprenant un calculateur (20) configuré pour exécuter un procédé selon l'une quelconque des revendications précédentes à partir d'information asynchrone reçue d'un capteur de lumière (10).

**Patentansprüche**

1. Verfahren zur Formverfolgung in einer Szene, aufweisend:

- Empfangen asynchroner Information eines Lichtsensors (10), der eine gegenüber der Szene angeordnete Pixelmatrix hat, wobei die asynchrone Information für jedes Pixel der Matrix sukzessive Ereignisse aufweist, die auf asynchrone Weise aus dem Pixel hervorgehen; und
- Aktualisieren eines Modells (G), das eine Menge von Punkten aufweist und die verfolgte Form eines Objekts repräsentiert, nach Detektion von dem Objekt zugeschriebenen Ereignissen in der asynchronen Information, wobei die Aktualisierung im Anschluss an die Detektion eines Ereignisses (ev(p,t)) aufweist:

* Verknüpfen des detektierten Ereignisses mit einem Punkt (m) des Modells, der einen minimalen Abstand bezüglich des Pixels (p) der Matrix hat, aus dem das detektierte Ereignis hervorgeht; und
* Bestimmen des aktualisierten Modells als Funktion des Pixels (p) der Matrix, aus dem das detektierte Ereignis hervorgeht, und des verknüpften Punkts (m) und unabhängig von Verknüpfungen, die vor der Detektion des Ereignisses (ev(p,t)) durchgeführt wurden.

**2.** Verfahren nach Anspruch 1, wobei, wenn in einem eine Schwelle ($d_{max}$, $d_{th}$) unterschreitenden Abstand bezüglich des Pixels (p), von wo aus ein detektiertes Ereignis (ev(p,t)) hervorgeht, sich kein Punkt des Modells (G) befindet, das Modell im Anschluss an die Detektion des Ereignisses, das dem Objekt nicht zugeschrieben wird, nicht aktualisiert wird.

**3.** Verfahren nach einem der vorstehenden Ansprüche, ferner aufweisend:

- Schätzen einer Bewegungsebene des Objekts, wobei die Bewegungsebene ($\Pi_k$) in einem dreidimensionalen Raum, nämlich zwei Raumdimensionen, die zwei Richtungen der Pixelmatrix entsprechen, und einer Zeitdimension, geschätzt wird durch Minimieren eines Abstandskriteriums bezüglich einer Menge von Punkten, die detektierte Ereignisse markieren, die im Verlaufe eines Zeitfensters, das an einem aktuellen Zeitpunkt endet, dem Objekt zugeschrieben worden sind; und
- im Anschluss an die Detektion eines Ereignisses (ev(p,t)) Berücksichtigen der geschätzten Bewegungsebene des Objekts, um zu entscheiden, das Ereignis dem Objekt zuzuschreiben oder nicht.

**4.** Verfahren nach Anspruch 3, wobei mehrere Objekte jeweilige verfolgte Formen in der Szene haben, wobei jedes der Objekte ein jeweiliges Modell ($G_k$), das nach Detektion von Ereignissen, die ihm zugeschrieben werden, aktualisiert wird, und eine geschätzte Bewegungsebene ($\Pi_k$) hat, wobei im Anschluss an die Detektion eines Ereignisses (ev(p,t)), das mindestens zweien der Objekte zuschreibbar ist, das Verfahren ferner aufweist:

- Berechnen der jeweiligen Abstände, in dem dreidimensionalen Raum, zwischen einem das detektierte Ereignis markierenden Punkt und den für die Objekte jeweils geschätzten Bewegungsebenen; und
- Zuschreiben des detektierten Ereignisses dem Objekt, für das der berechnete Abstand minimal ist.

**5.** Verfahren nach Anspruch 3 oder Anspruch 4, ferner aufweisend:

- Schätzen einer statistischen Verteilung von Abständen zwischen der Bewegungsebene ($\Pi_k$) des Objekts und Punkten, die detektierte Ereignisse markieren, die dem Objekt zugeschrieben worden sind; und
- im Anschluss an die Detektion eines Ereignisses (ev(p,t)) Berücksichtigen der geschätzten Bewegungsebene des Objekts und der geschätzten statistischen Verteilung, um zu entscheiden, das Ereignis dem Objekt zuzuschreiben oder nicht.

**6.** Verfahren nach Anspruch 5, ferner aufweisend:

- Bestimmen eines Intervalls ($I_k$) von gemäß der geschätzten statistischen Verteilung zulässigen Abstandswerten; und
- Nichtzuschreiben eines detektierten Ereignisses dem Objekt, wenn der Punkt, der das detektierte Ereignis in dem dreidimensionalen Raum markiert, bezüglich der geschätzten Bewegungsebene einen Abstand hat, der außerhalb des Intervalls zulässiger Abstandwerte ist.

**7.** Verfahren nach einem der vorstehenden Ansprüche, wobei mehrere Objekte jeweilige verfolgte Formen in der Szene haben, wobei jedes der Objekte ein jeweiliges Modell ($G_k$) hat, das nach Detektion von Ereignissen, die ihm zugeschrieben werden, aktualisiert wird, wobei im Anschluss an die Detektion eines Ereignisses (ev(p,t)) das Verfahren ferner aufweist:

- wenn ein einziges der Objekte die Bedingung erfüllt, in seinem Modell einen Punkt zu haben, der einen eine Schwelle ($d_{th}$) unterschreitenden Abstand bezüglich des Pixels (p) der Matrix, aus dem das detektierte Ereignis hervorgeht, hat, Zuschreiben des Ereignisses dem Objekt.

**8.** Verfahren nach einem der vorstehenden Ansprüche, wobei mehrere Objekte jeweilige verfolgte Formen in der Szene haben, wobei jedes der Objekte ein jeweiliges Modell ($G_k$) hat, das nach Detektion von Ereignissen, die ihm zugeschrieben werden, aktualisiert wird, wobei im Anschluss an die Detektion eines Ereignisses (ev(p,t)), das mindestens zweien der Objekte zuschreibbar ist, das Verfahren ferner aufweist:

- für jedes Objekt, dem das detektierte Ereignis zuschreibbar ist, Verknüpfen des detektierten Ereignisses mit einem Punkt (m) des Modells ($G_t$) des Objekts durch Minimieren eines jeweiligen Abstandskriteriums bezüglich des Pixels (p) der Matrix, aus dem das detektierte Ereignis hervorgeht; und
- Zuschreiben des detektierten Ereignisses dem Objekt, für das das minimierte Abstandskriterium am geringsten ist.

9. Verfahren nach einem der Ansprüche 1 bis 7, wobei mehrere Objekte jeweilige verfolgte Formen in der Szene haben, wobei jedes der Objekte ein jeweiliges Modell ($G_k$) hat, das nach Detektion von Ereignissen, die ihm zugeschrieben werden, aktualisiert wird, und wobei im Anschluss an die Detektion eines Ereignisses (ev(p,t)), das mindestens zweien der Objekte zuschreibbar ist, das detektierte Ereignis keinem der Objekte zugeteilt wird.

10. Verfahren nach einem der Ansprüche 1 bis 7, wobei mehrere Objekte jeweilige verfolgte Formen in der Szene haben, wobei jedes der Objekte ein jeweiliges Modell ($G_k$) hat, das nach Detektion von Ereignissen, die ihm zugeschrieben werden, aktualisiert wird, und wobei im Anschluss an die Detektion eines Ereignisses (ev(p,t)), das mindestens zweien der Objekte zuschreibbar ist, das detektierte Ereignis jedem der Objekte zugeteilt wird, denen das detektierte Ereignis zuschreibbar ist.

11. Verfahren nach Anspruch 10, wobei das Aktualisieren der Modelle ($G_k$) der Objekte, denen das detektierte Ereignis zugeschrieben wird, mit Gewichtungen durchgeführt wird, die von für die Objekte jeweils minimierten Abstandskriterien abhängen.

12. Verfahren nach einem der Ansprüche 1 bis 7, wobei mehrere Objekte jeweilige verfolgte Formen in der Szene haben, wobei jedes der Objekte ein jeweiliges Modell ($G_k$) hat, das nach Detektion von Ereignissen, die ihm zugeschrieben werden, aktualisiert wird, wobei das Verfahren ferner aufweist:

   - für jedes Objekt, Schätzen eines Taktes von dem Objekt zugeschriebenen Ereignissen und Speichern des Zeitpunkts, an dem das letzte dem Objekt zugeschriebene Ereignis detektiert worden ist; und
   - im Anschluss an die Detektion eines Ereignisses (ev(p,t)), das mindestens zweien der Objekte zuschreibbar ist, Zuschreiben des detektierten Ereignisses demjenigen der Objekte, für das das Produkt aus dem geschätzten Ereignistakt mal dem Zeitintervall zwischen dem gespeicherten Zeitpunkt und dem Zeitpunkt der Detektion des Ereignisses am nächsten bei 1 ist.

13. Verfahren nach einem der vorstehenden Ansprüche, wobei die Bestimmung des aktualisierten Modells eine Schätzung (45) einer räumlichen Transformation ($F_t$), die durch eine Menge von Parametern definiert ist, und eine Anwendung (46) der geschätzten räumlichen Transformation auf das Modell ($G_k$) aufweist, und wobei die Schätzung der räumlichen Transformation eine Berechnung der Parameter als Funktion des Gradienten eines Abstands, in der Ebene der Pixelmatrix, zwischen dem Pixel (p) der Matrix, aus dem das detektierte Ereignis hervorgeht, und einem Punkt, den man durch Anwendung der räumlichen Transformation auf den mit dem detektierten Ereignis verknüpften Punkt (m) des Modells gewinnt, aufweist.

14. Verfahren nach Anspruch 13, wobei die räumliche Transformation ($F_t$) eine Translation und eine Rotation in der Ebene der Pixelmatrix umfasst, wobei die Translation einen Vektor $\Delta T$ hat, der gleich - $\eta_1 \nabla_T f(\Delta \theta_0, \Delta T_0)$ ist, und die Rotation einen Winkel $\Delta \theta$ hat, der gleich - $\eta_2 \nabla_\theta f(\Delta \theta_0, \Delta T_0)$ ist, wobei $\eta_1$ und $\eta_2$ vordefinierte positive Konvergenzschritte sind und $\Delta \theta_0$ und $\Delta T_0$ spezifische Werte des Rotationswinkels und des Translationsvektors sind.

15. Verfahren nach Anspruch 14, wobei die spezifischen Werte des Rotationswinkels und des Translationsvektors $\Delta \theta_0 = \widehat{mcp}$ bzw. $\Delta T_0 = cp - R_{\Delta \theta 0}[cm]$ sind, wobei p das Pixel der Matrix bezeichnet, aus dem das detektierte Ereignis hervorgeht, m den mit dem detektierten Ereignis verknüpften Punkt des Modells bezeichnet, c das Zentrum der Rotation bezeichnet, cp einen Vektor von c nach p bezeichnet, cm einen Vektor von c nach m bezeichnet und $R_{\Delta \theta 0}[.]$ die Rotation von Zentrum c und Winkel $\Delta \theta_0$ ist.

16. Verfahren nach Anspruch 14 oder Anspruch 15, wobei die räumliche Transformation ($F_t$) eine affine Transformation ist, die ferner eine Anwendung von jeweiligen Skalenfaktoren entlang zweier in der Pixelmatrix enthaltener Achsen aufweist.

17. Verfahren nach Anspruch 16, wobei die Skalenfaktoren $s_x$, $s_y$ entlang der zwei Achsen x, y jeweils gemäß $s_x = 1 + \eta_3(|p_x| - |m_x|)$ und $s_y = 1 + \eta_3(|p_y| - |m_y|)$ berechnet werden, wobei $\eta_3$ ein vorgegebener positiver Konvergenzschritt ist, $p_x$ und $p_y$ jeweilige Koordinaten des Pixels (p) der Matrix, aus dem das detektierte Ereignis hervorgeht, entlang der Achsen x und y sind, und $m_x$ und $m_y$ jeweilige Koordinaten des mit dem detektierten Ereignis verknüpften Punkts (m) des Modells entlang der Achsen x und y sind.

**18.** Vorrichtung zur Formverfolgung in einer Szene, aufweisend einen Rechner (20), der konfiguriert ist, ausgehend von asynchroner Information, die von einem Lichtsensor (10) empfangen wird, ein Verfahren nach einem der vorstehenden Ansprüche auszuführen.

**Claims**

**1.** A method of tracking a shape in a scene, comprising:

receiving asynchronous information from a light sensor (10) having a matrix of pixels arranged opposite the scene, wherein the asynchronous information comprises, for each pixel of the matrix, successive events originating asynchronously from said pixel; and
updating a model (G) comprising a set of points and representing a tracked shape of an object, after detecting events attributed to said object in the asynchronous information, wherein the updating comprises, following detection of an event (ev(p, t)):

associating with the detected event a point (m) of the model having a minimum distance with respect to the pixel (p) of the matrix from which the detected event originates; and
determining the updated model according to the pixel (p) of the matrix from which the detected event originates and the associated point (m), and independently of the associations performed before the detection of said event (ev(p, t)).

**2.** The method of claim 1, wherein when no point of the model (G) is located at a distance less than a threshold ($d_{max}$, $d_{th}$) with respect to the pixel (p) from which a detected event (ev(p, t)) originates, the model is not updated following the detection of said event which is not attributed to the object.

**3.** The method of any one of the preceding claims, further comprising:

estimating a plane of displacement of the object, wherein the plane of displacement ($\Pi_k$) is estimated in a space with three dimensions, namely two spatial dimensions corresponding to two directions of the matrix of pixels and one time dimension, by minimizing a distance criterion in relation to a set of points that mark detected events which were attributed to the object during a time window ending at a current instant; and
following detection of an event (ev(p, t)), taking into account the estimated plane of displacement of the object in order to decide whether or not to attribute said event to the object.

**4.** The method of claim 3, wherein a plurality of objects have respective shapes tracked in the scene, wherein each one of the plurality of objects has a respective model ($G_k$) updated after detection of events attributed thereto and an estimated plane of displacement ($\Pi_k$), wherein the method further comprises, following detection of an event (ev(p, t)) attributable to at least two of the objects:

calculating respective distances, in the three-dimensional space, between a point marking said detected event and the planes of displacement respectively estimated for said objects; and
attributing said detected event to the object for which the calculated distance is minimal.

**5.** The method of claim 3 or claim 4, further comprising:

estimating a statistical distribution of distances between the plane of displacement ($\Pi_k$) of the object and points marking detected events which were attributed to the object; and
following detection of an event (ev(p, t)), taking into account the estimated plane of displacement of the object and the estimated statistical distribution in order to decide whether or not to attribute said event to the object.

**6.** The method of claim 5, further comprising:

determining an interval ($I_k$) of admissible distance values based on the estimated statistical distribution; and
not attributing a detected event to the object if the point marking said detected event in the three-dimensional space has, in relation to the estimated plane of displacement, a distance falling outside the interval of the admissible distance values.

7. The method of any one of the preceding claims, wherein a plurality of objects have respective shapes tracked in the scene, wherein each of the objects has a respective model ($G_k$) updated after detection of events attributed thereto, wherein the method further comprises, following detection of an event (ev(p, t)):
if only one of the objects satisfies a condition of having in its model a point that has a distance less than a threshold ($d_{th}$) with respect to the pixel (p) of the matrix from which the detected event originates, attributing the detected event to said one of the objects.

8. The method of any one of the preceding claims, wherein a plurality of objects have respective shapes tracked in the scene, wherein each one of the objects has a respective model ($G_k$) updated after detection of events attributed thereto, wherein the method further comprises, following detection of an event (ev(p, t)) attributable to at least two of the objects:

for each object to which the detected event is attributable, associating with the detected event a point (m) of the model ($G_t$) of said object by minimizing a respective distance criterion with respect to the pixel (p) of the matrix from which the detected event originates; and
attributing the detected event to the object for which the minimized criterion of distance is lowest.

9. The method of any one of claims 1 to 7, wherein a plurality of objects have respective shapes tracked in the scene, wherein each one of the plurality of objects has a respective model ($G_k$) updated after detection of events attributed thereto, and wherein, following detection of an event (ev(p, t)) attributable to at least two of the objects, the detected event is not assigned to any of said at least two of the objects.

10. The method of any one of claims 1 to 7, wherein a plurality of objects have respective shapes tracked in the scene, wherein each one of the plurality of objects has a respective model ($G_k$) updated after detection of events attributed to it, and wherein, following detection of an event (ev(p, t)) attributable to at least two of the objects, the detected event is assigned to each one of the objects to which the detected event is attributable.

11. The method of claim 10, wherein updating the models ($G_k$) of objects to which the detected event is attributed is carried out with weightings that depend on the distance criteria respectively minimized for said objects.

12. The method of any one of claims 1 to 7, wherein a plurality of objects have respective shapes tracked in the scene, wherein each one of the plurality of objects has a respective model ($G_k$) updated after detection of events attributed thereto, the method further comprising:

for each object, estimating a rate of events attributed to said object and memorizing an instant at which the last event attributed to said object was detected; and
following detection of an event (ev(p, t)) attributable to at least two of the objects, attributing the detected event to the one of the objects for which the product of the estimated rate of events by the time interval between the memorized instant and the instant of detection of said event is closest to 1.

13. The method of any one of the preceding claims, wherein determining the updated model comprises estimating (45) a spatial transformation ($F_t$) defined by a set of parameters, and applying (46) the estimated spatial transformation to the model ($G_k$), and wherein estimating the spatial transformation comprises calculating said parameters as a function of a gradient of a distance, in the plane of the matrix of pixels, between the pixel (p) of the matrix from which the detected event originates and a point obtained by applying the spatial transformation to the point (m) of the model associated with the detected event.

14. The method of claim 13, wherein the spatial transformation ($F_t$) includes a translation and a rotation in the plane of the matrix of pixels, wherein the translation has a vector $\Delta T$ taken equal to $- \eta_1.\nabla_T f(\Delta\theta_0, \Delta T_0)$ and the rotation has an angle $\Delta\theta$ taken equal to $- \eta_2.\nabla_\theta f(\Delta\theta_0, \Delta T_0)$, where $\eta_1$ and $\eta_2$ are predefined positive convergence steps and $\Delta\theta_0$ and $\Delta T_0$ are particular values of the angle of rotation and of the translation vector.

15. The method of claim 14, wherein said particular values of the angle of rotation and of the translation vector are respectively $\Delta\theta_0 = m\widehat{cp}$ and $\Delta T_0 = cp - R_{\Delta\theta_0}[cm]$, where p designates the pixel of the matrix from which the detected event originates, m designates the point of the model associated with the detected event, c designates the center of the rotation, cp designates a vector pointing from c to p, cm designates a vector pointing from c to m,

and $R_{\Delta\theta_0}[.]$ is the rotation of center c and of angle $\Delta\theta_0$.

16. The method of claim 14 or claim 15, wherein the spatial transformation ($F_t$) is an affine transformation further including application of respective scaling factors according to two axes included in the matrix of pixels.

17. The method of claim 16, wherein the scaling factors $s_x$, $s_y$ according to the two axes x, y are respectively calculated according to $s_x = 1 + \eta_3.(|p_x| - |m_x|)$ and $s_y = 1 + \eta_3.(|p_y| - |m_y|)$, where $\eta_3$ is a predefined positive convergence step, $p_x$ and $p_y$ are respective coordinates, according to the axes x and y, of the pixel (p) of the matrix from which the detected event originates, and $m_x$ and $m_y$ are respective coordinates, according to the axes x and y, of the point (m) of the model associated with the detected event.

18. A device for tracking a shape in a scene, comprising a computer (20) configured to execute a method as claimed in any one of the preceding claims using asynchronous information received from a light sensor (10).

FIG. 1

FIG. 2A

FIG. 2B

FIG. 2C

FIG. 3A

FIG. 3B

FIG. 4

FIG. 5

FIG. 6A

FIG. 6B

|  |  |  |  |
|---|---|---|---|
| Initializing | Converged | Tracking | Tracking |
| (a) | (b) | (c) | (d) |

FIG. 7

# FIG. 8

**20** — box: $a \leftarrow 1$ ; $b \leftarrow 0$

**21** — ATTENTE

**22** — DÉTECTION $ev(p, t)$

**23** — OUI / $T(a) > t-\Delta t$ ? / NON

**24** — $a \leftarrow a + 1$

**25** — $m \leftarrow \text{Argmin}\,[d(p, q)]$ , $q \in G-M$

**26** — OUI / $d(p, m) < d_{max}$ ? / NON

**27** — $b \leftarrow b + 1$

**28** — $T(b) \leftarrow t$ ; $P(b) \leftarrow p$ ; $M(b) \leftarrow m$

**30** — OUI / $b \geq a + L - 1$ ? / NON

**31** — CHOIX DE $F_t$ PAR MINIMISATION DE
$$\sum_{n=a}^{b} \left\| cP(n) - R_{\Delta\theta}[cM(n)] - \Delta T \right\|^2$$

**32** — $G \leftarrow R_{\Delta\theta}[G] + \Delta T$ ; $M \leftarrow R_{\Delta\theta}[M] + \Delta T$

**FIG. 9**

**FIG. 10**

40 — INITIALISATION $G_k$
(k=1, 2, ...,K)

41 — ATTENTE

42 — DÉTECTION
ev(p,t)

43 — $m_k \longleftarrow$ Argmin [d(p,q)]
$q \in G_k$
(k=1, 2, ...,K)

44 — ATTRIBUTION DE
ev(p,t) À L'OBJET k

45 — CALCUL TRANSFORMATION
SPATIALE $F_t$

46 — $G_k \longleftarrow F_t(G_k)$

47 — ESTIMATION DU PLAN
DE DÉPLACEMENT $\pi_k$

# FIG. 11

FIG. 12

FIG. 13

**FIG. 14**

$$i \leftarrow 1$$
$$k \leftarrow k(1)$$
$$C \leftarrow (t - t_{k(1),N(k(1))}) r_{k(1)}$$

60

$$i \leftarrow i + 1$$

61

$$C' \leftarrow (t - t_{k(i),N(k(i))}) \, r_{k(i)}$$

62

OUI $\quad |C'-1| < |C-1| ?\quad$ NON

63

$$k \leftarrow k(i)$$
$$C \leftarrow C'$$

64

OUI $\quad i = j ?\quad$ NON

65

MISE À JOUR
$$t_{k,0}, \ t_{k,1}, \ ..., \ t_{k,N(k)}$$

66

$$r_k \leftarrow \frac{N(k)}{t - t_{k,0}}$$

67

45

## FIG. 15

**FIG. 16**

FIG. 17

$I_k$

Probabilité

$\sigma_k$

79

78

0   5   10   15   20   25

$d_k$

Distance événement / plan de déplacement
(unités arbitraires)

80 — $D' = |eg_k \cdot n_k|$

OUI   $D \in I_k$ ?   NON

81

82 — MISE À JOUR DISTRIBUTION

41

83 — CALCUL $I_k$

45

FIG. 18

**FIG. 19**

**FIG. 20**

**FIG. 21**

(a)

(b)

FIG. 22

**FIG. 23**

**FIG. 24**

FIG. 25

FIG. 26

FIG. 27

EP 3 138 079 B1

FIG. 28

EP 3 138 079 B1

FIG. 29

FIG. 30

EP 3 138 079 B1

FIG. 31

FIG. 32

**FIG. 33**

**FIG. 34**

FIG. 35

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 20080135731 A1

- WO 2013093378 A1

**Littérature non-brevet citée dans la description**

- **S. RUSINKIEWICZ ; M. LEVOY.** Efficient Variants of the ICP Algorithm. *3rd International Conférence on 3D Digital Imaging and Modeling,* Juin 2001, 145-152
- **M. HERSCH et al.** Iterative Estimation of Rigid Body Transformations - Application to robust object tracking and Iterative Closest Point. *Journal of Mathematical Imaging and Vision,* 2012, vol. 43 (1), 1-9
- **T. DELBRÜCK et al.** Activity-Driven, Event-Based Vision Sensors. *Proceedings of 2010 IEEE International Symposium on Circuits and Systems (ISCAS),* 2426-2429
- **T. DELBRÜCK ; P. LICHTSTEINER.** Fast sensory motor control based on event-based hybrid neuromorphic-procedural system. *ISCAS 2007,* 27 Mai 2007, 845-848

- **Z. NI et al.** Asynchronous event-based visual shape tracking for stable haptic feedback in microrobotics. *IEEE Transactions on Robotics,* 2012, vol. 28 (5), 1081-1089
- **P. LICHTSTEINER et al.** A 128x128 120 dB 15 $\mu$s Latency Asynchronous Temporal Contrast Vision Sensor. *IEEE Journal of Solid-State Circuits,* Février 2008, vol. 43 (2), 566-576
- **C. POSCH et al.** A QVGA 143 dB Dynamic Range Frame-Free PWM Image Sensor With Lossless Pixel-Level Video Compression and Time-Domain CDS. *IEEE Journal of Solid-State Circuits,* Janvier 2011, vol. 46 (1), 259-275
- **DE R. BENOSMAN et al.** Event-based Visual Flow. *IEEE Transaction On Neural Networks and Learning Systems,* Septembre 2013, vol. 25 (2), 407-417